# EUROPÄISCHE PATENTSCHRIFT

(11) **EP 1 031 868 B1**
(45) Veröffentlichungstag und Bekanntmachung des Hinweises auf die Patenterteilung: **14.05.2003**
(21) Anmeldenummer: 00102274.8
(22) Anmeldetag: 17.02.2000
(51) Int. Cl.: G02B 27/10, G01B 9/02

(54) **Kompensierter Parallel-Strahlteiler mit zwei Platten sowie Interferometer**
Compensated parallel beam splitter with two plates and interferometer
Séparateur parallêle de faisceaux compensés avec deux plaques et interféromètre

(30) Priorität: 26.02.1999 DE 19908297; 04.12.1999 DE 19958555
(43) Veröffentlichungstag der Anmeldung: 30.08.2000
(73) Patentinhaber: Dr. Johannes Heidenhain GmbH, 83292 Traunreut (DE)
(72) Erfinder: Spanner, Erwin, 83278 Traunstein (DE)

(56) Entgegenhaltungen:
- EP-A- 0 469 718
- EP-A- 0 623 801
- WO-A-96/31752
- DE-A- 19 815 241
- DE-C- 3 645 001
- US-A- 4 170 401
- US-A- 4 671 613
- US-A- 5 808 739

## Beschreibung

Die vorliegende Erfindung betrifft eine Strahlteilerbaugruppe deren Vorwendung sowie ein Interferometer mit einer Strahlteilerbaugruppe.

Interferometer enthalten in der Regel ein oder mehrere Strahlteiler-Baugruppen, die zur physikalischen Aufspaltung eines Strahlenbündels in einen Meßstrahlengang und einen Referenzstrahlengang dienen; oft ist hierbei auch von Meß- und Referenzarm die Rede. In umgekehrter Strahl-Richtung dient diese Baugruppe in der Regel zur Vereinigung der Meß- und Referenzstrahlengänge. Je nach Interferometer-Variante sind die optischen Achsen in Meß- und Referenzarm unterschiedlich zueinander orientiert. So können Meß- und Referenzarm etwa senkrecht zueinander ausgerichtet sein oder aber parallel zueinander.
Im erstgenannten Fall werden dabei in der Regel Strahlteilerwürfel verwendet, auf die ein Tripelprisma aufgekittet ist, welches den Referenzarm bildet. Hierzu sei z.B. auf die US 4,802,765 verwiesen.
Im zweiten Fall mit parallelen Meß- und Referenzstrahlengängen wird zumeist ein sog. Kösters-Prisma als geeigneter Strahlteiler eingesetzt. Ein derartiges Prisma ist als klassisches Strahlteilerelement etwa im Lehrbuch "Bauelemente der Optik", Naumann/Schröder, Carl Hanser Verlag, 6. Auflage, S. 184 gezeigt. Als nachteilig an einer derartigen Variante einer Strahlteiler-Baugrupe ist zunächst anzuführen, daß es relativ aufwendig in der Herstellung ist. Im Fall eventueller, fertigungsbedingter Pyramidalfehler der Kösters-Teilprismen resultiert ein Strahlengang, der mehr oder weniger vom idealen Strahlengang abweicht. Desweiteren erweist sich als entscheidender Nachteil, daß die Parallelität der beiden Austritts-Strahlenbündel empfindlich vom möglichst korrekten Einfallswinkel des Einfalls-Strahlenbündels zur Strahlteiler-Baugruppe abhängt; bereits eine geringe Verkippung gegenüber der idealen Einfallsachse bewirkt eine signifikante Konvergenz bzw. Divergenz der beiden Austritts-Strahlenbündel. Ebenso wirkt sich ein eventueller Parallelversatz des Einfalls-Strahlenbündels gegenüber der idealen Einfallsachse deutlich auf den Abstand der beiden Austritts-Strahlenbündel aus. Insbesondere bei relativ großen optischen Weglängen zwischen der Strahlteiler-Baugruppe und den nachgeordneten Meß- und Referenzreflektoren im Meß- und Referenzarm sind derartige undefinierte Änderungen in der Ausbreitungsrichtung der die Strahlteiler-Baugruppe verlassenden Strahlenbündel als nachteilig anzusehen, da nachfolgende Optik-Komponenten im Strahlengang exakt zu diesen Strahlenbündeln ausgerichtet werden müssen. Es ist demzufolge ein großer Justageaufwand in Bezug auf den möglichst korrekten Einfall des Eintritts-Strahlenbündels erforderlich.

Aus der US 5,675,412 ist nunmehr eine Strahlteiler-Baugruppe bekannt, die diese Probleme grundsätzlich umgeht. Die beiden Bauteile, die eine strahlteilende bzw. strahlablenkende optische Wirkung in der Baugruppe aufweisen, sind jedoch separat voneinander angeordnet und müssen demzufolge hochexakt zueinander justiert werden, damit die austretenden zwei Strahlenbündel auch parallel zueinander verlaufen.

Eine weitere Variante einer Strahlteiler-Baugruppe für ein Interferometer, die zwei parallel zueinander orientierte Strahlenbündel liefert, ist desweiteren in der US 5,808,739 offenbart. Hierbei trifft ein einfallendes Strahlenbündel auf eine erste Anordnung aus zwei parallel angeordneten Planplatten, die zueinander durch Abstandshalter fixiert werden. Auf der Rückseite der ersten Planplatte ist eine Strahlteilerschicht angeordnet, die den einfallenden Strahl in einen durchgelassenen Strahlanteil ART und einen reflektierten Strahlanteil ARR aufspaltet. Der reflektierte Strahlanteil ARR verläßt nach nochmaligem Durchlauf wieder die erste Platte und gelangt auf eine zweite Anordnung aus zwei beabstandet angeordneten Planplatten. Nach mehrmaliger Reflexion in der zweiten Anordnung verläß dieser Strahlanteil ARR die Strahlteiler-Anordnung in Richtung Reflektor. Der an der Strahlteilerschicht der ersten Anordnung durchgelassene Strahlanteil ART wird an einer reflektierenden Schicht der zweiten Planplatte reflektiert und wieder in Richtung der ersten Planplatte umgelenkt. Nach nochmaligem Durchtritt durch die erste Planplatte verläßt dieser Strahlanteil ART parallel zum Strahlanteil ARR die erste Planplattenanordnung.
Um bei dieser vorgeschlagenen Strahlteilervariante die erwünschten Vorteile zu erreichen, ist es nötig, innerhalb der ersten Anordnung die beiden Planaplatten hochexakt parallel zueinander auszurichten; hierzu ist wiederum ein entsprechender Justageaufwand beim Zusammenbau bzw. Fertigungsaufwand bei der Herstellung der zwischen den Planplatten angeordneten Abstandshalter erforderlich.

Aus der EP 0 469 718 A2 ist schließlich eine weitere Variante einer Strahlteilerbaugruppe bekannt, von der bei der Formulierung des Oberbegriffes der unabhängigen Patentansprüche ausgegangen wurde. Die in dieser Druckschrift vorgeschlagene Strahlteilerbaugruppe umfasst ein planparalleles Strahlteilerelement, an dessen Strahlaustrittsfläche ein Prisma angekittet ist, durch das die beiden parallelen Austritts-Strahlenbündel die Strahlteilerbaugruppe verlassen. Als nachteilig an dieser Strahlteilerbaugruppe ist anzuführen, dass im Fall von Temperaturänderungen im planparallelen Strahlteilerelement und im Prisma die beiden Austrittsstrahlenbündel aufgrund unterschiedlicher, zurückgelegter Weglängen unterschiedlich beeinflusst werden, insbesondere unterschiedliche Änderungen der optischen Weglängen erfahren. Diese Änderungen sind jedoch nicht messbedingt und führen demzufolge zu Fehlmessungen.

Eine erste Teilaufgabe der vorliegenden Erfindung ist es daher, eine Strahlteilerbaugruppe insbesondere für ein Interferometer anzugeben, die ein einfallendes Strahlenbündel in mindestens zwei austretende, parallele Strahlenbündel aufspaltet. Gefordert ist hierbei eine möglichst hohe Unempfindlichkeit gegenüber nicht optimal ausgerichteten, einfallenden Strahlenbündeln. Ferner sollen keine großen fertigungstechnischen Anforderungen an die Herstellung der Strahlteilerbaugruppe zu stellen sein. Eine zweite Teilaufgabe der vorliegenden Erfindung besteht darin, ein Interferometer anzugeben, bei dem die oben angsprochenen Probleme möglichst nicht auftreten.

Eine Strahlteilerbaugruppe für ein Interferometer, die den Anforderungen gemäß der ersten Teilaufgabe genügt, ist Gegenstand des Patentanspruches 1. Eine Verwendung ist in Anspruch 15 augsgeten. Ein Interferometer, bei dem die Unzulänglichkeiten gemäß der zweiten Teilaufgabe beseitigt sind, ist Gegenstand des Patentanspruches 16.

Vorteilhafte Ausführungsformen der erfindungsgemäßen Strahteilerbaugruppe bzw. des erfindungsgemäßen Interferometers ergeben sich aus den Maßnahmen, die in den jeweils abhängigen Patentansprüchen aufgeführt sind.

Die erfindungsgemäße Strahlteilerbaugruppe besteht im wesentlichen aus zwei separaten Elementen, nämlich einem Strahlteilerelement und einem Ausgleichselement. Beide Elemente der Strahlteilerbaugruppe sind hierbei als planparallele Platten ausgebildet, d.h. die Einhaltung von Parallelitätsanforderungen an die jeweiligen Grenzflächen erfordert weder einen besonderen fertigungstechnischen Aufwand noch eine eventuelle Justage derselben. Desweiteren gewährleistet die erfindungsgemäße Strahlteilerbaugruppe, daß auch im Fall eines nicht optimal ausgerichteten Eintritts-Strahlenbündels die mindestens zwei Austritts-Strahlenbündel weitestgehend parallel zueinander verlaufen bzw. der Abstand der beiden Austritts-Strahlenbündel weitestgehend erhalten bleibt.

Die vorgeschlagene Strahlteilerbaugruppe und die damit verbundene Justagetoleranz erlaubt desweiteren eine gewisse Flexibilität im Aufbau des erfindungsgemäßen Interferometers, in dem dieselbe eingesetzt wird. So ist insbesondere ein modularer, justageunkritischer Aufbau des Interferometer-Meßkopfes möglich, bestehend aus einem Optik-Modul und einem Elektronik-Modul. Ersteres Modul enthält u.a. hierbei die erfindungsgemäße Strahlteiler-Baugruppe, das letztgenannte Modul enthält hingegen u.a. die Detektorelemente zum Erfassen der Interferenzsignale.

Desweiteren kann das erfindungsgemäße Interferometer flexibel für verschiedenste Applikationen ausgelegt werden, d.h. beispielsweise auch zur kombinierten Erfassung von Linear- und Rotationsbewegungen etc..

Weitere Vorteile sowie Einzelheiten der erfindungsgemäßen Strahlteilerbaugruppe sowie des erfindungsgemäßen Interferometers ergeben sich aus der nachfolgenden Beschreibung mehrerer Ausführungsbeispiele anhand der beiliegenden Zeichnungen.

Dabei zeigt
- Figur 1: den Strahlengang einer ersten Ausführungs-form der erfindungsgemäßen Strahlteilerbaugruppe;
- Figur 2a und 2b: die Verhältnisse im Fall einer Abweichung des Eintritts-Strahlenbündels von der idealen Einfallsrichtung;
- Figur 3: den Strahlengang eines ersten Ausführungsform des erfindungsgemäßen Interferometers, in dem die obige, erste Ausführungsform der Strahlteilerbaugruppe eingesetzt wird.
- Figur 4: den Strahlengang einer zweiten Ausführungsform der erfindungsgemäßen Strahlteilerbaugruppe;
- Figur 5: den Strahlengang einer dritten Ausführungsform der erfindungsgemäßen Strahlteilerbaugruppe;
- Figur 6: den Strahlengang einer zweiten Ausführungsform des erfindungsgemäßen Interferometers;
- Figur 7: den Strahlengang einer dritten Ausführungsform des erfindungsgemäßen Interferometers;

- Figur 8: den Strahlengang einer zweiten Ausführungsform des erfindungsgemäßen Interferometers.

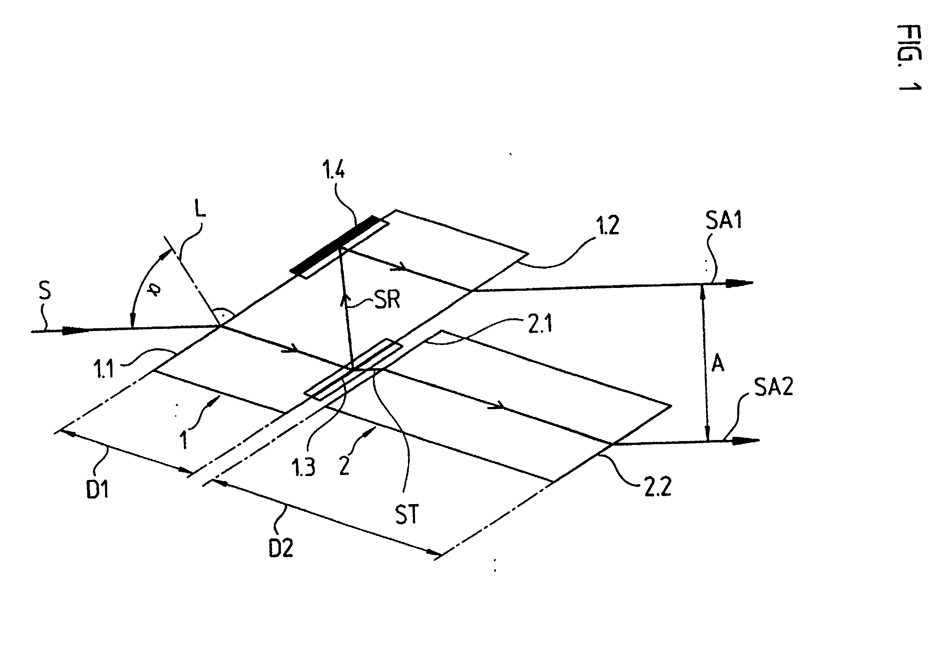

Anhand von Figur 1 sei nachfolgend der prinzipielle Aufbau der erfindungsgemäßen Strahlteilerbaugruppe anhand eines ersten Ausführungsbeispieles erläutert. Die erfindungsgemäße Strahlteilerbaugruppe dieses Ausführungsbeispieles umfaßt mit einem Strahlteilerelement 1 und einem Ausgleichselement 2 im wesentlichen zwei Komponenten. Nicht dargestellt sind in Figur 1 aus Gründen der Übersichtlichkeit hierbei die weiteren Interferometer-Elemente wie Lichtquelle, Reflektorelemente, Detektorelemente, Auswerteeinheit etc..

Das von der Lichtquelle, z.B. von einem HeNe-Laser, gelieferte Strahlenbündel gelangt als Eintritts-Strahlenbündel S zunächst auf das Strahlteilerelement 1. Dieses Element 1 ist als transparente Platte mit mindestens zwei exakt parallelen Grenzflächen 1.1, 1.2 ausgebildet. Als Plattenmaterial eignen sich z.B. optische Standardgläser wie BK7. Alternativ kann auch Quarzglas sowie ggf. Zerodur zum Einsatz kommen. An der Eintritts-Grenzfläche 1.1 erfolgt in diesem Ausführungsbeispiel im Eintrittsbereich lediglich eine Brechung des Eintritts-Strahlenbündels S in Richtung des eingezeichneten Lotes L der Eintrittsgrenzfläche 1.1 hin. Das Eintritts-Strahlenbündel S tritt hierbei unter dem Winkel α gegen das Lot L in das Strahlteilerelement 1 bzw. die transparente Platte ein. Der Winkel α wird in einer möglichen Ausführungsform hierbei als Brewster-Winkel α ≈ 57° gewählt, wenn als Plattenmaterial Glas verwendet wird.

Nach dem Durchlauf durch die Platte trifft das Eintritts-Strahlenbündel S auf die zweite Grenzfläche 1.2, die zumindest im Auftreff-Teilbereich für das Eintritts-Strahlenbündel S als Strahlteilerfläche 1.3 ausgelegt ist. An der Strahlteilerfläche 1.3 erfolgt eine Aufspaltung des Eintritts-Strahlenbündels S in zwei Teilstrahlenbündel SR, ST. Das Teilstrahlenbündel SR wird hierbei an der Strahlteilerfläche 1.3 reflektiert und wieder in Richtung der ersten Grenzfläche 1.1 hin umgelenkt; das zweite Teilstrahlenbündel ST hingegen durchtritt die Strahlteilerfläche 1.3 in Richtung des Ausgleichselementes 2.

Auf der ersten Grenzfläche 1.1 ist zumindest im Auftreff-Teilbereich des Teilstrahlenbündels SR eine Reflektorfläche 1.4 angeordnet, an der dieses Teilstrahlenbündel SR wiederum in Richtung der zweiten Grenzläche 1.2 reflektiert wird, die es in einem transparenten Teilbereich durchtritt, so daß dort lediglich eine Brechung an der entsprechenden Grenzfläche beim Übergang vom Glas nach Luft erfolgt. Nach dem Verlassen des Strahlteilerelementes 1 liegt somit das erste Austritts-Strahlenbündel SA1 vor, das im weiteren - nicht gezeigten - Interferometerstrahlengang als Meß- oder Referenzstrahl eingesetzt werden kann.

Das an der Strahlteilerfläche 1.3 transmittierte Teilstrahlenbündel ST gelangt anschließend auf eine erste Grenzfläche 2.1 des Ausgleichselementes 2, wird an der Grenzfläche 2.1 gebrochen und durchläuft das Ausgleichselement 2 ohne weitere Ablenkung bis zur zweiten Grenzfläche 2.2, durch die es das Ausgleichselement 2 als zweites Austritts-Strahlenbündel SA2 verläßt. Das zweite Austritts-Strahlenbündel SA2 kann dann wiederum als Meßoder Referenzstrahlenbündel im weiteren Interferometerstrahlengang eingesetzt werden.

Das Ausgleichselement 2 ist in der gezeigten Ausführungsform ebenfalls als planparallele Platte mit zwei zueinander parallelen Grenzflächen ausgebildet, d.h. die Eintritts- und Austritts-Grenzflächen 2.1, 2.2 sind hochexakt parallel zueinander orientiert. Als Material für das Ausgleichselement 2 eignen sich wiederum die bereits oben angegebenen Materialien für das Strahlteilerelement 1.
Die wesentliche optische Funktionen des Ausgleichselementes 2 ist nunmehr darin zu sehen, daß darüber sichergestellt werden kann, daß die beiden Austritts-Strahlenbündel SA1, SA2 letztlich im wesentlichen die gleichen optischen Weglängen in den entsprechenden Elementen 1, 2 zurücklegen. Dies wird im dargestellten Ausführungsbeispiel dadurch sichergestellt, daß die Dicke D₂ des Ausgleichselement 2 doppelt so groß gewählt wird wie die Dicke D₁ des Strahlteilerelementes 1.
Im dargestellten Ausführungsbeispiel läßt sich die obige Forderung wie erwähnt einfach durch die Wahl der doppelten Dicke D₂ des Ausgleichselementes 2 im Vergleich zur Dicke D₁ des Strahlteilerelementes 1 umsetzen, da die beiden Elemente aus dem gleichen Material bestehen. Allgemein muß demzufolge gewährleitet sein, daß die Austritts-Strahlenbündel SA1, SA2 im wesentlichen die gleichen optischen Weglängen in den Elementen 1, 2 der Strahlteilerbaugruppe durchlaufen haben, wobei unter optischer Weglänge das Produkt aus geometrischer Weglänge und Brechungsindex verstanden sei. Durch eine derartige Auslegung des Ausgleichselementes 2 ist sichergestellt, daß auch im Fall von eventuellen Temperaturschwankungen die beiden Austritts-Strahlenbündel SA1, SA2 in der erfindungsgemäßen Strahlteilerbaugruppe den gleichen Einflüssen unterliegen und demzufolge auch identisch beeinflußt werden.

Als weiterer positiver Nebeneffekt ist im Zusammenhang mit der Funktion des Ausgleichselementes 2 aufzuführen , daß damit eine Vergrößerung des Abstandes A der beiden Austritts-Strahlenbündel SA1 und SA2 erreicht werden kann. Dadurch lassen sich die Strahlengänge der beiden Austritts-Strahlenbündel SA1, SA2 an gewisse konstruktive Gegebenheiten des Interferometer-Aufbaus anpassen.

Als vorteilhaft erweist sich, das Ausgleichselement 2 geringfügig beabstandet vom Strahlteilerelement 1 anzuordnen, z.B. durch einen schmalen Luftspalt getrennt. Im Fall des hierzu alternativen Aufkittens dieses Elementes 2 auf das Strahlteilerelement 1 könnte eine Strahlscherung aufgrund eines sog. Kittfehlers, wie z.B. einer eventuellen keiligen Kittschicht, verursacht werden. Desweiteren würde das Aufkitten einen zusätzlichen Arbeitsgang in der Fertigung der Baugruppe darstellen.

Die Strahlteilerfläche 1.3 im Strahlteilerelement 1 ist im Ausführungsbeispiel der Figur 1 polarisationsoptisch wirksam, d.h. die beiden Austritts-Strahlenbündel SA1 und SA2 weisen zueinander senkrecht orientierte Polarisationsrichtungen auf. Die Reflektorfläche 1.4 des Strahlteilerelementes 2 ist als hochreflektierendes dielektrisches Schichtpaket ausgebildet.
Wenn in einer derartigen Ausführungsform die Strahlteilerfläche derart ausgelegt wird, daß das transmittierte Teilstrahlenbündel ST eine p-Polarisation aufweist, so ergibt sich im Fall des oben erwähnten Einfallswinkels α ≈ 57° ein weiterer positiver Nebeneffekt. Es muß in diesem Fall dann keine reflexmindernde Beschichtung bzw. Vergütung auf den Grenzflächen 2.1, 2.2 des Ausgleichselementes 2 aufgebracht werden, d.h. es resultiert ein verringerter Fertigungsaufwand.

An dieser Stelle sei darauf hingewiesen, daß die oben beschriebene Ausbildung der Strahlteilerfläche 1.3 bzw. der Reflektorfläche 1.4 keineswegs erfindungswesentlich ist.-Vielmehr sind auch bekannte Alternativen hierzu im Rahmen der vorliegenden Erfindung realisierbar. So kann die Strahlteilerfläche 1.3 etwa auch als sog. Neutralteiler ausgelegt werden, der sowohl dielektrisch als auch metallisch ausgebildet sein kann. Ebenso ist es möglich, die Reflektorfläche 1.4 als metallische Reflektorfläche zu realisieren, beispielsweise in Form einer Al- oder Ag-Beschichtung usw... In beiden Fällen ist lediglich die strahlaufteilende bzw. strahlreflektierende Wirkung der jeweiligen Flächen im Rahmen der vorliegenden Erfindung relevant.

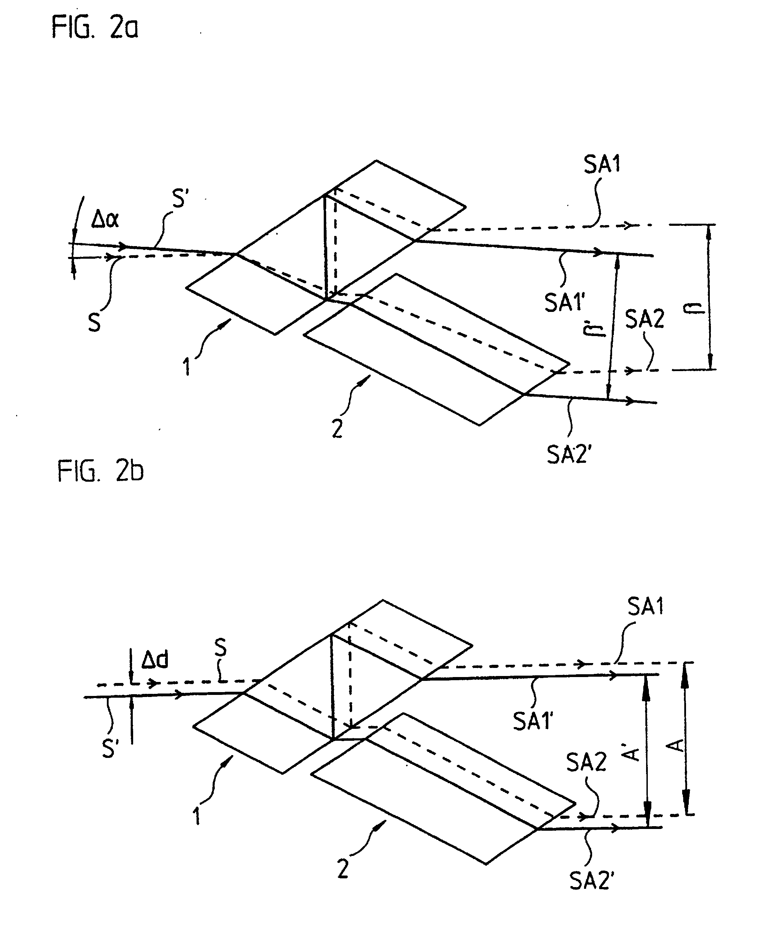

Mit Hilfe der beiden Figuren 2a und 2b soll nachfolgend ein wesentlicher Vorteil der erfindungsgemäßen Strahlteilerbaugrupe veranschaulicht werden. Gezeigt ist hierbei das in Figur 1 beschriebene Ausführungsbeispiel der Strahlteilerbaugruppe, wobei jeweils neben einem optimal eintretenden Eintritts-Strahlenbündel S ein weiteres Eintritts-Strahlenbündel S' dargestellt ist, das abweichend von der idealen Einfallsrichtung in die Strahlteilerbaugruppe eintritt. In der Praxis bedeutet dies, daß die Strahlteilerbaugruppe beispielsweise verdreht gegenüber dem Eintritts-Strahlenbündel S angeordnet ist.
Im Fall der Figur 2a tritt das Eintritts-Strahlenbündel S' hierbei unter dem Winkel Δα gegenüber der idealen Einfallsrichtung bzw. dem Eintritts-Strahlenbündel S in die erfindungsgemäße Strahlteilerbaugruppe bzw. das Strahlteilerelement 1 ein. Trotz der vorhandenen Abweichung resultieren aufgrund der erfindungsgemäßen Maßnahmen ausgangsseitig jedoch wiederum zwei Austritts-Strahlenbündel SA1', SA2', die exakt parallel zueinander orientiert sind, d.h. der Winkel β' zwischen den beiden Austritts-Strahlenbündeln SA1', SA2' ergibt sich wie im Ideal-Fall der beiden Austritts-Strahlenbündel SA1, SA2 als β' = β = 0.
Im Fall der Verwendung eines herkömmlichen Kösters-Prismas würde in diesem Fall ein Winkel β ≠ 0 resultieren, was wiederum entsprechende Probleme bei der Justierung nachgeordneter Optikkomponenten zur Folge hätte.

In Figur 2b ist schließlich skizziert, wie sich ein eventueller Parallelversatz Δd des Eintritts-Strahlenbündels S' von der idealen Einfallsrichtung eines Eintritts-Strahlenbündels S auf die beiden Austritts-Strahlenbündel SA1', SA2' auswirkt. In der Praxis würde dies wiederum bedeuten, daß ein Parallelversatz der Strahlteilerbaugruppe gegenüber dem Eintritts-Strahlenbündel S' vorliegt, beispielsweise verursacht durch nicht-optimale Justage der Strahlteilerbaugruppe.
In Figur 2b ist nunmehr erkennbar, daß auch ein derartiger, eventueller Parallelversatz den Abstand der beiden Austritts-Strahlenbündel SA1', SA2' nicht beeinflußt; auch im Fall des vorliegenden Parallelversatzes Δd des Eintritts-Strahlenbündels S' ändert sich der Abstand A' zwischen den beiden AustrittsAustritts-Strahlenbündeln SA1', SA2' im Vergleich zum Idealfall mit dem Abstand A zwischen den beiden Austritts-Strahlenbündeln SA1, SA2 nicht, d.h. A' = A.
Demgegenüber wäre bei einem Kösters-Prisma in diesem Fall eine Änderung des Abstandes A' zu erwarten gewesen, was wiederum Probleme im nachfolgenden Strahlengang verursacht.

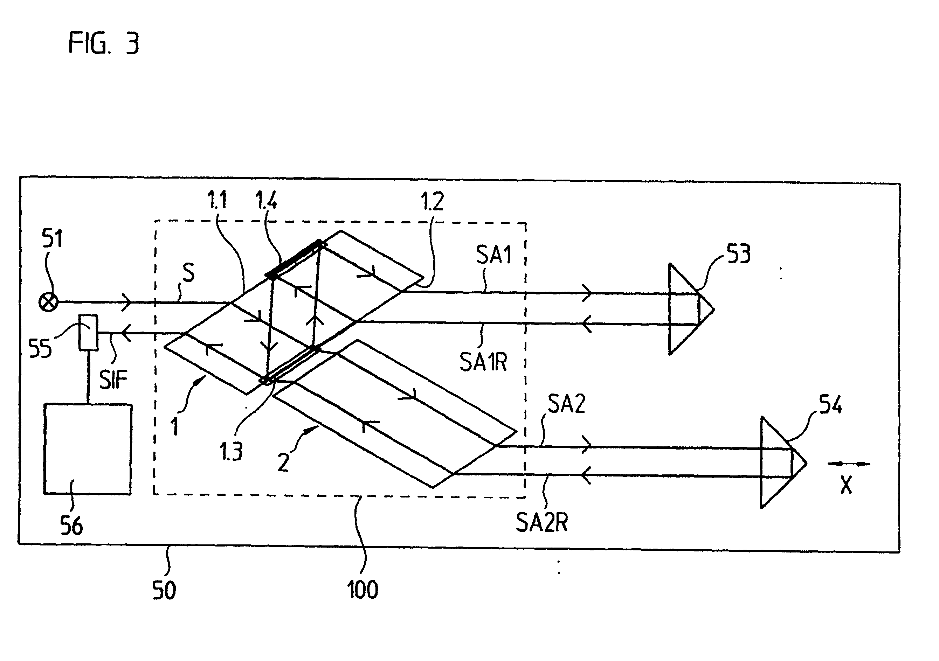

Eine schematische Ansicht einer ersten Ausführungsform des erfindungsgemäßen Interferometers, in dem die oben beschriebene Strahlteilerbaugruppe eingesetzt wird, ist in Figur 3 gezeigt.
Das erfindungsgemäße Interferometer 50 umfaßt hierbei eine Lichtquelle 51, beispielsweise einen bekannten HeNe-Laser, dessen Ausgangsstrahl als Eintritts-Strahlenbündel S in die erfindungsgemäße Strahlteilerbaugruppe 100 eintritt. Diese ist identisch zum ersten Ausführungsbeispiel ausgebildet, welches bereits in Figur 1 beschrieben wurde. Auf eine erneute detaillierte Beschreibung der Strahlteilerbaugruppe 100 sei deshalb an dieser Stelle verzichtet.
Die Strahlteilerbaugruppe 100 verlassen zwei parallele Austritts-Strahlenbündel SA1, SA2. Hierbei gelangt das erste Austritts-Strahlenbündel SA1 in einen Referenzarm des Interferometers 50, in dem beabstandet von der Strahlteilerbaugruppe 100 ein stationärer Referenzreflektor 53 angeordnet ist. Der Referenzreflektor 53 ist hierbei vorzugsweise als bekanntes Tripelprisma ausgebildet.
Das zweite Austritts-Strahlenbündel wiederum tritt in den eigentlichen Meßarm des Interferometers 50 ein, in dem ein Meßreflektor 54 beweglich in Meßrichtung x angeordnet ist, dessen Relativ- oder ggf. Absolutposition zu bestimmen ist. Auch der Meßreflektor 54 ist als Tripelprisma ausgebildet.

Nach Reflexion der beiden Austritts-Strahlenbündel SA1, SA2 an den beiden Reflektoren 53, 54 im Meß- und Referenzarm gelangen die rückreflektierten Strahlenbündel SA1R, SA2R wieder auf die erfindungsgemäße Strahlteilerbaugruppe 100. Diese wird nunmehr von den beiden Strahlenbündeln SA1R, SA2R in umgekehrter Reihenfolge durchlaufen, die an der Strahlteilerfläche 1.3 wieder zusammengeführt bzw. vereinigt werden. Das Paar interfererenzfähiger Strahlenbündel gelangt als Strahlenbündel SIF schließlich auf eine Detektoreinheit 55, die die auftretenden Interferenzsignale erfaßt und zur Weiterverarbeitung bzw. Positionsbestimmung an eine nachgeordnete Auswerteeinheit 56 übergibt. An dieser Stelle sei erwähnt, daß z.B. im Strahlengang der beiden interferenzfähigen Strahlenbündel noch weitere optische Elemente angeordnet sein können, die in Figur 3 jedoch nicht im einzelnen dargestellt sind. Hierbei kann es sich etwa um polarisationsoptische und strahlteilende Elemente handeln etc., die z.B. in bekannter Art und Weise zur Erzeugung phasenverschobener Interferenzsignale dienen.

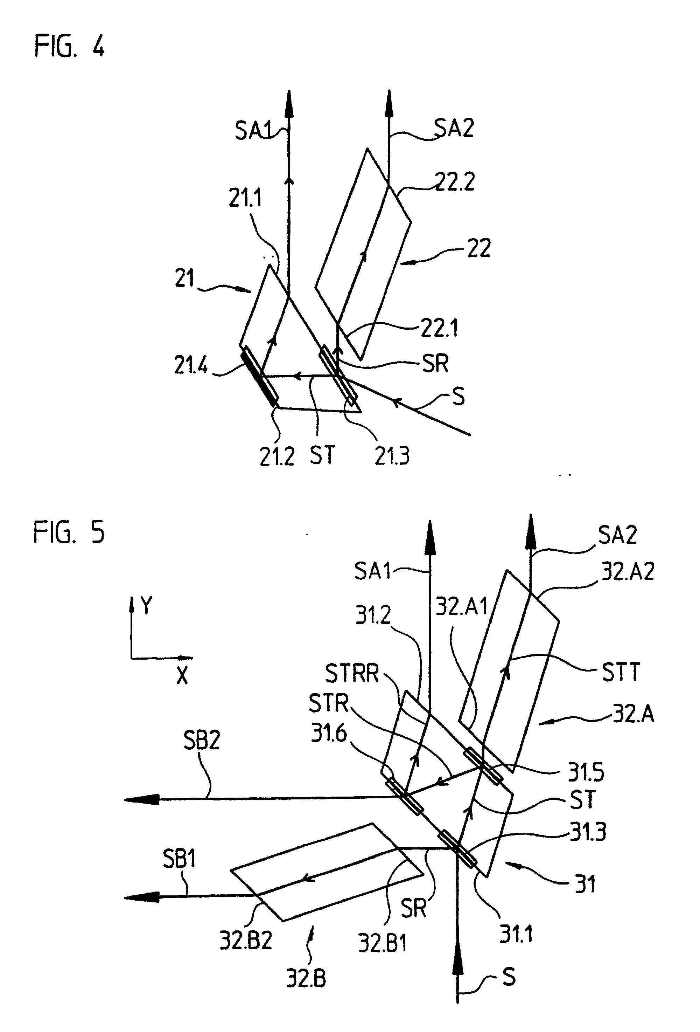

Ein zweites Ausführungsbeispiel der erfindungsgemäßen Strahlteilerbaugruppe sei nachfolgend anhand von Figur 4 erläutert.
Wiederum umfaßt die Strahlteilerbaugruppe im wesentlichen zwei Komponenten: ein Strahlteilerelement 21, ein Ausgleichselement 22.

Sowohl das Strahlteilerelement 21 als auch das Ausgleichselement 22 sind wie im vorherigen Ausführungsbeispiel als planparallele Platte ausgebildet, die aus den oben bereits angegebenen Materialien gefertigt wird.
Das Eintritts-Strahlenbündel S trifft wiederum auf eine erste Grenzfläche 21.1 des Strahlteilerelementes 21 auf. In diesem Bereich ist die erste Grenzfläche 21.1 nunmehr als Strahlteilerfläche 21.3 ausgebildet. Das Eintritts-Strahlenbündel S wird an der Strahlteilerfläche 21.3 in ein erstes Teilstrahlenbündel ST und ein zweites Teilstrahlenbündel SR aufgespalten.
Das erste Teilstrahlenbündel ST durchtritt die Strahlteilerfläche 21.3 und trifft nach Durchlaufen des Strahlteilerelementes 21 auf die zweite Grenzfläche 21.2 desselben auf, das in diesem Teilbereich als Reflektorfläche 21.4 ausgebildet ist. Von der Reflektorfläche 21.4 wird das Teilstrahlenbündel ST wiederum in Richtung der ersten Grenzfläche 21.1 zurückreflektiert, die in einem Teilbereich dann transmittiert wird und wo eine entsprechende Brechung beim Übergang von Glas nach Luft stattfindet. Nach dem Verlassen des Strahlteilerelementes 21 liegt ein erstes Austritts-Strahlenbündel SA1 vor.

Das an der Strahlteilerfläche 21.3 reflektierte, zweite Teilstrahlenbündel SR wird in Richtung des Ausgleichselementes 22 bzw. in Richtung einer ersten Grenzfläche 22.1 desselben umgelenkt. Das Teilstrahlenbündel SR durchläuft das Ausgleichselement 22 und tritt an der zweiten Grenzfläche 22.2 desselben als zweites Austritts-Strahlenbündel SA2 wieder aus diesem Bauteil 22 aus.

In Bezug auf die verschiedenen Ausführungsmöglichkeiten der erfindungsgemäßen Strahlteilerbaugruppe sei auf die vorhergehende Beschreibung des ersten Ausführungsbeispieles verwiesen.

Ein drittes Ausführungsbeispiel der erfindungsgemäßen Strahlteilerbaugruppe sei nachfolgend anhand der Figur 5 erläutert, das im wesentlichen aus einer Kombination der beiden vorhergehenden Varianten resultiert. Diese unterschieden sich primär darin, daß einmal ein glasseitiger Einfall des Eintritts-Strahlenbündels auf die Strahlteilerfläche erfolgte (Figur 1), während im anderen Fall ein luftseitiger Einfall vorgesehen war (Figur 4).

Mit Hilfe der in Figur 5 dargestellten Variante der Strahlteilerbaugruppe läßt sich z.B. ein sog. Zwei-Achsen-Interferometer aufbauen, da ausgangsseitig zwei Paare mit jeweils zwei parallelen Austrittsstrahlenbündeln SA1, SA2, SB1, SB2 erzeugt werden. Je ein Paar der Austrittsstrahlenbündel SA1, SA2, SB1, SB2 dient zur Vermessung einer Koordinatenachse x oder y. Die erfindungsgemäße Strahlteilerbaugrupe umfaßt nunmehr neben einem Strahlteilerelement 31 zwei weitere Ausgleichselemente 32A, 32B in jeder der beiden Austrittsrichtungen x, y. Die Ausgleichselemente 32A, 32B sind erneut als planparallele Platten mit mindestens zwei zueinander parallel orientierten Grenzflächen ausgebildet.

Das Eintritts-Strahlenbündel S trifft wiederum auf die erste Grenzfläche 31.1 des Strahlteilerelementes 31, die in diesem Teilbereich eine erste Strahlteilerfläche 31.3 aufweist. Während in den bisherigen Varianten das Strahlteilungsverhältnis an den jeweiligen Strahlteilerflächen im Regelfall als 1:1 gewählt wurde, ist nunmehr ein bestimmtes Verhältnis der Intensitäten der reflektierten und transmittierten Teilstrahlenbündel von Bedeutung. So wird die erste Strahlteilerfläche 31.3 so ausgebildet, daß das Intensitätsverhältnis I des reflektierten ersten Teilstrahlenbündels SR zum transmittierten zweiten Teilstrahlenbündel ST als I = 1:3 gewählt wird.
Das erste Teilstrahlenbündel SR wird an der Strahlteilerfläche 31.3 in Richtung des ersten Ausgleichselementes 32.B umgelenkt, tritt durch dessen erste Grenzfläche 32.B1 ein, durchläuft dieses und verläßt das erste Ausgleichselement 32.B als erstes Austritts-Stahlenbündel SB1 in (negativer) x-Richtung.
Das zweite Teilstrahlenbündel ST durchläuft das Strahlteilerelement 31 in Richtung der zweiten Grenzfläche 31.2 des Strahlteilerelementes 31 und trifft in einem Teilbereich auf, in dem eine zweite Strahlteilerfläche 31.5 angeordnet ist. Dieser Teilbereich wirkt wiederum teilreflektierend bzw. teiltransmitterend für das auftreffende Teilstrahlenbündel ST, wobei das Intensitätsverhältnis l aus reflektiertem zu transmittiertem Strahlanteil nunmehr als l = 2:1 gewählt wird. Es resultieren an der zweiten Strahlteilerfläche 31.5 demzufolge ein drittes und viertes Teilstrahlenbündel STT, STR.

Das zweite Teilstrahlenbündel STR wird wiederum in Richtung der ersten Grenzfläche 31.1 des Strahlteilerelementes 31 zurückreflektiert und trifft in einem Teilbereich derselben auf, die als Strahlteilerfläche 31.6 wirksam ist und nachfolgend als dritte Strahlteilerfläche 31.6 bezeichnet sei. Das Verhältnis l von reflektierter zur transmittierter Strahlintensität ist bei der dritten Strahlteilerfläche 31.6 als l = 1:1 gewählt.
Das an der dritten Strahlteilerfläche 31.6 transmittierte Teilstrahlenbündel verläßt schließlich das Strahlteilerelement 31 und damit die Strahiteilerbaugruppe als zweites Austrittsstrahlenbündel SB2 parallel zum ersten Austritts-Strahlenbündel SB1.

Das dritte Teilstrahlenbündel STT, das die zweite Strahlteilerfläche 31.5 durchtritt, gelangt nachfolgend das zweite Ausgleichselement 32.A. Nach dem Eintritt des Teilstrahlenbündels STT durch die erste Grenzfläche 32.A1 des Ausgleichselementes 32.A durchläuft das Teilstrahlenbündel STT das Ausgleichselement 32.A und verläßt das zweite Ausgleichselement 32.A durch die zweite Grenzfläche 32.A2 als drittes Austritts-Strahlenbündel SA2 in y-Richtung.

Das an der dritten Strahlteilerfläche reflektierte Teilstrahlenbündel STRR wird in Richtung der zweiten Grenzfläche 31.2 des Strahlteilerelementes 31 umgelenkt und durchtritt diese Grenzfläche 31.2 in einem Teilbereich, in dem lediglich eine Brechung beim Übergang von Glas nach Luft erfolgt. Es resultiert aus diesem Teilstrahlenbündel STRR das vierte Austritts-Strahlenbündel SA1, welches parallel zum dritten Austrittsstrahlenbündel SA2 orientiert ist.

Die beiden Paare von jeweils parallelen Austritts-Strahlenbündeln SA1, SA2, SB1, SB2 sind orthogonal zueinander orientiert und können in entsprechenden Interferometer-Anordnungen wiederum zur Bestimmung der Position eines Meßreflektors genutzt werden, wie dies z.B. anhand von Fig. 3 erläutert wurde.

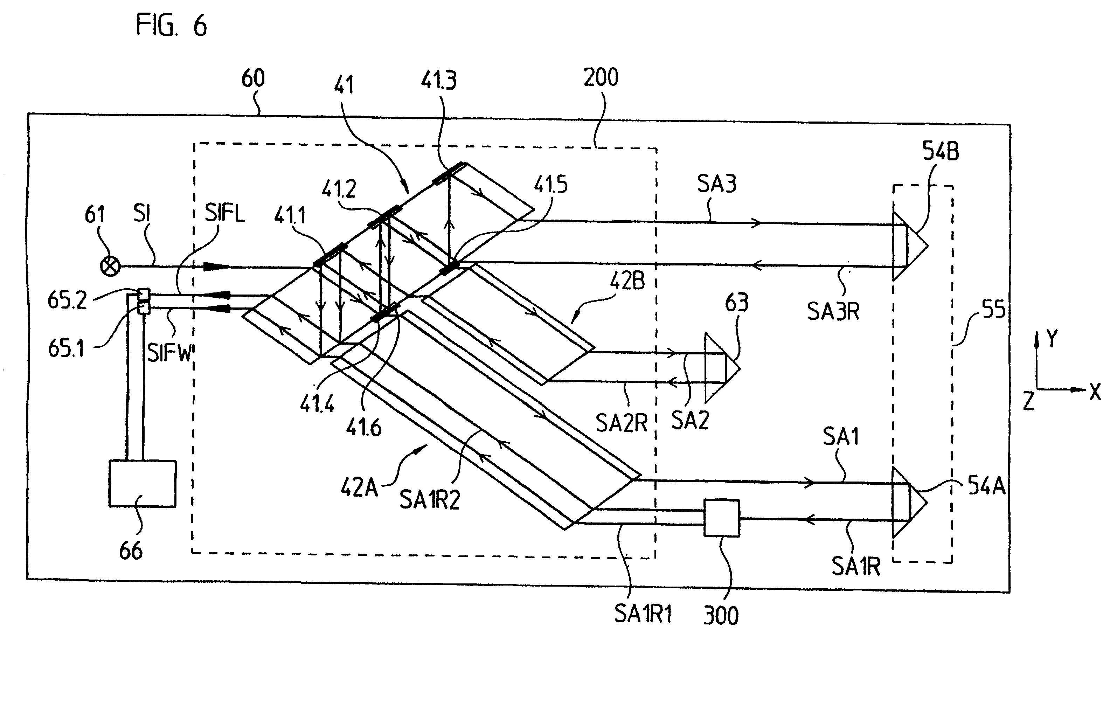

Eine zweite Ausführungsform des erfindungsgemäßen Interferometers 60 ist in Figur 6 gezeigt. Diese Variante ermöglicht nunmehr nicht nur die Erfassung der Linearbewegung eines zu vermessenden Objektes sondern auch die gleichzeitige Messung einer eventuelle Rotationsbewegung einer linear verschiebbaren Baugruppe. Entsprechende Aufgabenstellungen liegen etwa im Bereich von Halbleiter-Fertigungssystemen vor, wie z.B. bei Wafer-Steppern etc..

Als wesentlicher Unterschied zur ersten erfindungsgemäßen Interferometer-Variante in Figur 3 ist aufzuführen, daß die in Figur 6 dargestellte Ausführungsform zwei als Tripelprisma ausgebildete Meßreflektoren 54A, 54B umfaßt, die zusammen in einer Baueinheit 55 angeordnet sind. Die Baueinheit 55 ist in x-Richtung verschiebbar gegenüber den restlichen Interferometer-Komponenten angeordnet; darüberhinaus kann aufgrund von Führungstoleranzen noch eine Rotation der Baueinheit 55 um die Achse z resultieren, die senkrecht zur Zeichenebene orientiert ist. Sowohl die Verschiebung in x-Richtung als auch die Rotation um die z-Achse können mit Hilfe der zweiten erfindungsgemäßen Interferometer-Variante erfaßt werden.
Zu diesem Zweck sind bestimmte Modifikationen im Strahlengang im Vergleich zu den vorherigen Beispielen erforderlich, u.a. im Aufbau der eingesetzten Strahlteiler-Baugruppe 200, die nachfolgend erläutert werden sollen. Das erfindungsgemäße Interferometer 60 umfaßt eine Lichtquelle 61, die das Eintritts-Strahlenbündel S liefert, welches in die Strahlteilerbaugruppe 200 gelangt. Dieselbe weist nunmehr einen für diese Anwendung modifizierten Aufbau auf. So sind ähnlich zum Beispiel aus Figur 5 neben einem Strahlteilerelement 41 zwei Ausgleichselemente 42A, 42B vorgesehen, die in der gezeigten Art und Weise geringfügig beabstandet vom Strahlteilerelement 41 angeordnet sind. Das Strahlteilerelement 41, das erste Ausgleichselement 42A und das zweite Ausgleichselement 42B sind wiederum als planparallele Platten aus den oben aufgeführten Materialien ausgebildet. Auf derjenigen Grenzfläche des Strahlteilerelementes 41, die der Lichtquelle 61 zugewandt ist, sind insgesamt drei Teilbereiche als Reflektorflächen 41.1, 41.2, 41.3 ausgebildet; alternativ könnte an dieser Stelle selbstverständlich auch eine einzige durchgehende Reflektorschicht eingesetzt werden. Auf der gegenüberliegenden, zweiten Grenzfläche sind zwei Teilbereiche als Strahlteilerflächen 41.4, 41.5 ausgebildet; zwischen den Strahlteilerflächen 41.4, 41.5 ist ein weiterer Teilbereich als Reflektorfläche 41.6 ausgebildet. Die Strahlteilerflächen 41.4, 41.5 sind hinsichtlich des Strahlteilungsverhältnisses so ausgelegt, daß die letztlich zur Interferenz kommenden Teilstrahlenbündel möglichst die gleichen Intensitäten aufweisen.
Die dargestellte Variante der Strahlteilerbaugruppe 200 liefert ausgangsseitig drei parallele Austritts-Strahlenbündel SA1, SA2, SA3. Zwei der Austritts-Strahlenbündel SA1, SA3 werden als Meßstrahlen genutzt, die auf die beiden Meßreflektoren 54A, 54B in der Baueinheit 55 auftreffen. Das dritte Austritts-Strahlenbündel SA2 wird als Referenzstrahl genutzt und trifft auf den stationären Referenzreflektor 63 auf, der ebenfalls als retroreflektierendes Tripelprisma ausgebildet ist. Nach Rückreflexion von den Reflektoren 54B und 63 gelangen die beiden rückreflektierten Strahlenbündel SA2R und SA3R auf die Strahlteilerbaugruppe 200 bzw. dort auf das zweite Ausgleichselement 42B und das Strahlteilerelement 41.
Das zurückreflektierte Strahlenbündel SA1R gelangt auf eine weitere Strahlteilerbaugruppe 300, die in Figur 6 lediglich schematisch angedeutet ist. Von der zweiten Strahlteilerbaugruppe 300 wird das Strahlenbündel SA1R wiederum in zwei parallele Austritts-Strahlenbündel SA1R1, SA2R2 aufgespalten, die dann auf das erste Ausgleichselement 42A auftreffen. Im Hinblick auf die zweite Strahlteiler-Baugruppe 300 ist lediglich anzuführen, daß darüber aus einem einfallenden Eintritts-Strahlenbündel zwei parallele Austritts-Strahlenbündel erzeugbar sein müssen. Beispielsweise könnte an dieser Stelle demzufolge eine erfindungsgemäße Strahlteiler-Baugruppe eingesetzt werden, wie sie anhand von Figur 1 beschrieben wurde.
Das von der zweiten Strahlteiler-Baugruppe 300 gelieferte Strahlenbündel SA1R1 wird im Strahlteilerelement 41 mit dem vom Meßreflektor 54B zurückreflektierten Strahlenbündel SA3R zusammengeführt; als interferenzfähiges erstes Paar von Strahlenbündeln gelangen diese beiden Strahlenbündel SA1R1, SA3R als Strahlenbündel SIFW auf eine erste Detektoreinheit 65.1. Das Strahlenbündel SIFW bzw. das entsprechende Interferenzsignal liefert hierbei die Information bezüglich einer eventuellen Rotation der Baueinheit 55 um die z-Achse.
Das von der zweiten Strahlteiler-Baugruppe 300 gelieferte Strahlenbündel SA1 R2 wird im Strahlteilerelement 41 mit dem vom stationären Meßreflektor 63 zurückreflektierten Strahlenbündel SA2R zusammengeführt; als interferenzfähiges zweites Paar von Strahlenbündeln gelangen diese beiden Strahlenbündel SA1 R2, SA2R als Strahlenbündel SIFL auf eine zweite Detektoreinheit 65.2. Das Strahlenbündel SIFL liefert die Information bezüglich einer linearen Verschiebung der Baueinheit 55 entlang der Meßrichtung x. Die von den beiden Detektoreinheiten 65.1, 65.2 erfaßten Interferenzsignale werden zur Weiterverarbeitung an eine nachgeordnete Auswerteeinheit 66 übergeben.

Im Hinblick auf die optischen Weglängen der verschiedenen Strahlenbündel, die zur Interferenz kommen gilt auch in diesem Beispiel, daß die jeweiligen optischen Weglängen im Interferometer, die z.B. in Glas und Luft zurückgelegt wurden, identisch sind. Hierzu wurde die Dicke des zweiten Ausgleichselementes 42B doppelt so groß gewählt wie die Dicke des Strahlteilerelementes 41; die Dicke des ersten Ausgleichselementes 42A wiederum ist viermal so groß gewählt wie die Dicke des Strahlteilerelementes 41. Im Hinblick auf die Definition der Dicken dieser Elemente sei auf das beschriebene Beispiel in Figur 1 verweisen.

In einer weiteren vorteilhaften Abwandlung dieses Ausführungsbeispieles kann vorgesehen werden, die von den verschiedenen Reflektoren 54A, 54B, 63 zurückkommenden Strahlenbündel SA1 R, SA2R, SA3R nicht in der gleichen Ebene zurückzureflektieren, in der der die Strahlenbündel SA1, SA2, SA3 auf die Reflektoren 54A, 54B, 63 einfallen, d.h. in der Zeichenebene; es kann vielmehr ebenso vorgesehen werden, die Strahlenbündel SA1R, SA2R, SA3R senkrecht zur Einfallsebene zurück zur Strahlteiler-Baugruppe 200 zu reflektieren. Dies bietet Vorteile im Hinblick auf die resultierende Baugröße der Strahlteiler-Baugruppe 300 als auch hinsichtlich der Ausgestaltung der verschiedenen Strahlteiler- und Reflektorflächen in der Strahlteiler-Baugruppe 300.

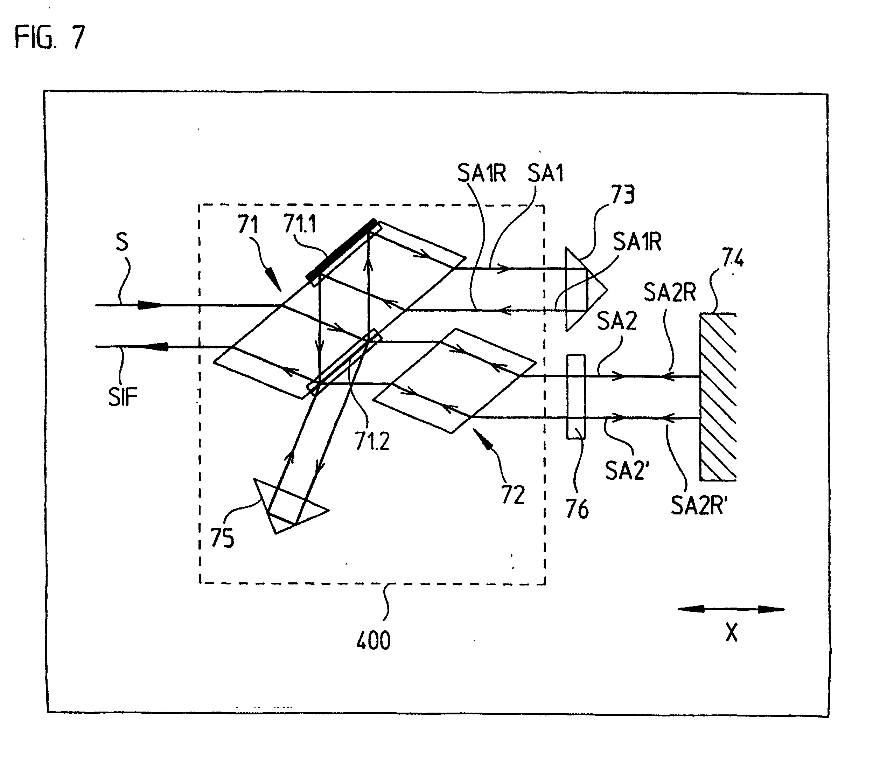

Anschließend sei eine dritte Variante des erfindungsgemäßen Interferometers anhand der Figur 7 erläutert. In den beiden oben erläuterten Interferometer-Ausführungsformen wurden als Reflektoren stets Tripelprismen eingesetzt, d.h. retroreflektierende Elemente. Nunmehr ist hingegen vorgesehen, zumindest in einem Interferometerarm einen Planspiegel als Reflektor einzusetzen, beispielsweise im Meßarm. Dies ist insbesondere dann vorteilhaft, wenn mit Hilfe des erfindungsgemäßen Interferometers Bewegungen in einer Ebene erfaßt werden sollen, d.h. beispielsweise eine gleichzeitige Bewegung in x- und y-Richtung. Um auch in diesem Fall eine interferometrische Positionsbestimmung zu ermöglichen, sind räumlich ausgedehnte Reflektoren erforderlich, damit auch im Fall einer gleichzeitigen Bewegung in x-und y-Richtung eine Rückreflexion vom jeweiligen Meßreflektor erfolgt. Zu diesem Zweck sind retroreflektierende Elemente wie Tripelprismen ungeeignet.

Das von einer in - Figur 7 nicht gezeigten - Lichtquelle kommende, linear polarisierte Eintritts-Strahlenbündel S gelangt hierbei zunächst wieder auf die Strahlteilerbaugruppe 400, die in dieser Ausführungsform neben dem Strahlteilerelement 71 und dem Ausgleichselement 72 noch ein weiteres Reflektorelement 75 umfaßt. Auf der dem einfallen Eintritts-Strahlenbündel S zugewandten Grenzfläche des Strahlteilerelementes 71 ist ein Teilbereich vorgesehen , der als Reflektorfläche 71.1 dient; auf der gegenüberliegenden Grenzfläche ist ein Teilbereich als Strahlteilerfläche 71.2 ausgelegt. In analoger Weise zum Ausführungsbeispiel in Figur 1 liefert die Strahlteilerbaugruppe 400 wiederum zwei parallele Austritts-Strahlenbündel SA1, SA2.
Das erste Austritts-Strahlenbündel SA1 gelangt im Referenzarm des Interferometers auf einen Referenzreflektor 73, der als retroreflektierendes Tripelprisma ausgelegt ist. Vom Referenzreflektor 73 wird das Strahlenbündel SA1R in Richtung der Strahlteilerbaugruppe 400 zurückreflektiert und mit einem zweiten Strahlenbündel SA2R' zusamengeführt, so daß ein Paar interferenzfähiger Strahlenbündel SIF auf die - in Figur 7 nicht gezeigt - Detektoreinheit gelangt.
Das zweite Interferenzstrahlenbündel SA2R' resultiert hierbei in nachfolgend erläuterter Weise aus dem zweiten Austritts-Strahlenbündel SA2, das die Strahlteilerbaugrupppe 400 in Richtung des in x-Richtung beweglichen Meßreflektors 74 verläßt. Wie bereits angedeutet ist der Meßreflektor 74 nunmehr als räumlich ausgedehnter Planspiegel ausgebildet.
Das nach wie vor linear polarisierte Austritts-Strahlenbündel SA2 durchläuft vor dem Auftreffen auf den Meßreflektor 74 ein polarisations-veränderndes Element 76 in Form einer λ/4-Platte, durch die es eine zirkulare Polarisation erhält. Nach der Rückreflexion am Meßreflektor 74 weist das Strahlenbündel SA2R eine entgegengesetzte zirkulare Polarisation auf. Nach nochmaligem Durchtritt durch die λ/4-Platte 76 liegt ein linear-polarisiertes Strahlenbündel vor, wobei die Polarisationsebene senkrecht zu derjenigen des ursprünglichen Eintritts-Strahlenbündels S orientiert ist. Nach Durchlauf durch das Ausgleichselement 72 trifft das derart polarisierte Strahlenbündel SA2R auf die Strahlteilerfläche 71.2 auf und wird nunmehr vollständig in Richtung des retroreflektierenden Reflektorelementes 75 reflektiert. Nach Zurückreflexion über das Reflektorelement 75 auf die Strahlteilerfläche 71.2 erfolgt eine nochmalige vollständige Reflexion in Richtung des Ausgleichselementes 72, ehe das Strahlenbündel SA2' die Strahlteilerbaugruppe 400 in Richtung des Meßreflektors 74 verläßt. Nach Durchlauf durch die λ/4-Platte 76 liegt wiederum ein zirkular polarisiertes Strahlenbündel vor, das auf den Meßreflektor 74 auftrifft. Nach der Rückreflexion am Meßreflektor besitzt das Strahlenbündel SA2R' wiederum die umgekehrte zirkulare Polarisation; nach Durchlauf durch die λ/4-Platte 76 ist das Strahlenbündel SA2R' linear-polarisiert, wobei die Polarisationsebene nunmehr senkrecht zur Polarisationsebene des Strahlenbündels SA1R ist, mit dem es schließlich überlagert wird. Hierzu wird das Strahlenbündel SA2R' nach Durchlaufen des Ausgleichselementes 72 und Transmission durch die Strahlteilerfläche 71.2 mit dem Strahlenbündel SA1R innerhalb des Strahlenbündels SIF zusammengeführt, welches schließlich auf die Detektoreinheit gelangt und das verschiebungsabhängige Interferenzsignal liefert. In dieser Variante des erfindungsgemäßen Interferometers wird die Forderung nach gleichen zurückgelegten optischen Weglängen in Glas und Luft ebenfalls eingehalten, obwohl das Strahlteilerelement 71 und das Ausgleichselement 72 innerhalb der Strahlteilerbaugruppe die gleiche Dicke aufweisen. Aufgrund des zwei- bzw. viermaligen Durchlaufs durch das Ausgleichselement 72 wird die obige Forderung jedoch auch in dieser Konfiguration erfüllt.

In einer möglichen Abwandlung der Interferometer-Variante in Fig. 7 ist es ferner möglich, diese als Differential-Planspiegel-Interferometer auszubilden. Hierzu wäre ergänzend zum Beispiel in Figur 7 i.w. ein zweiter Planspiegel-Meßreflektor zum dort vorgesehenen Meßreflektor 74 erforderlich, auf den dann eines der beiden Austritts-Strahlenbündel SA2, SA2' auftrifft.

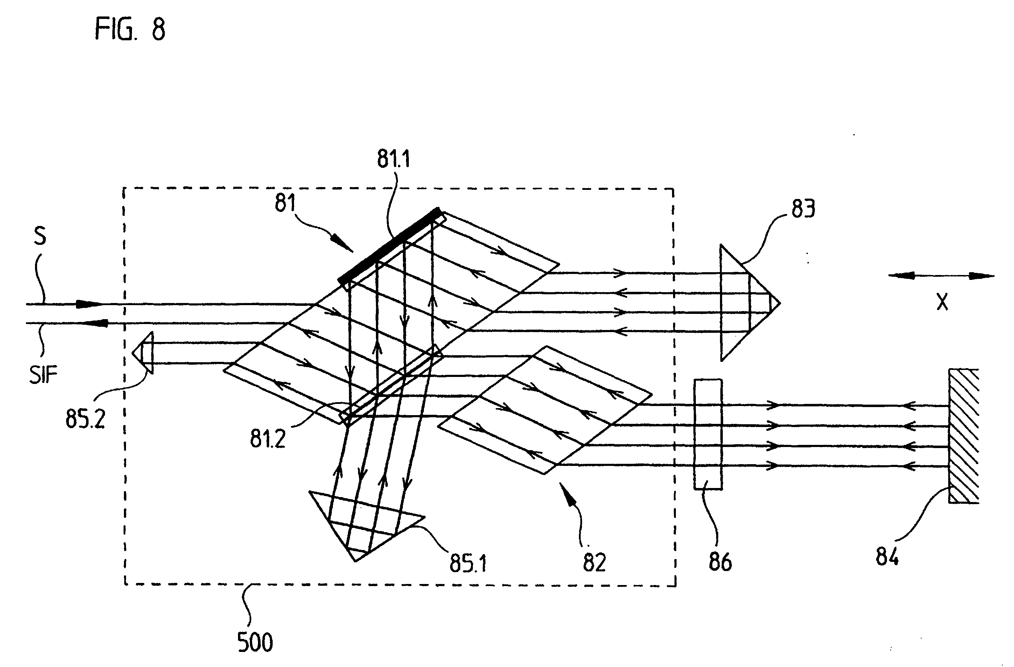

Eine weitere Abwandlung des Interferometer-Ausführungsbeispiels aus Figur 7 ist schließlich in Figur 8 gezeigt. Wiederum ist der bewegliche Meßreflektor 84 als Planspiegel ausgebildet, während als stationärer Referenzreflektor 83 ein Tripelprisma dient.
Das vierte Ausführungsbeispiel des erfindungsgemäßen Interferometers entspricht mit Ausnahme eines zweiten Reflektorelementes 85.2 in der Strahlteilerbaugruppe 500 im wesentlichen dem Aufbau des vorherigen, dritten Ausführungsbeispieles. Hierbei umfaßt die Strahlteilerbaugruppe 500 wiederum ein Strahlteilerelement 81 mit Grenzflächen-Teilbereichen, die als Reflektorflächen 81.1 und als Strahlteilerflächen 81.2 wirksam sind. Ferner ist wie im Beispiel der Figur 7 ein polarisations-änderndes, optisches Element 86 in Form einer λ/4-Platte im Meßarm angeordnet.
Durch die gezeigte Anordnung des zweiten Reflektorelementes 85.2 wird letztlich ein zweiter Durchlauf der Strahlenbündel durch sämtliche Interferometer-Komponenten bewirkt, ehe ein Paar interferierender Strahlenbündel SIF auf eine wiederum nicht gezeigte Detektoreinheit gelangt. Als wesentlicher Effekt dieses zweimaligen Durchlaufes der verschiedenen Strahlenbündel durch die verschiedenen Interferometer-Komponenten resultiert eine halbierte Signalperiode im erzeugten Interferenzsignal im Vergleich zum vorherigen Beispiel. Es ist mit dieser Variante des erfindungsgemäßen Interferometers somit eine Auflösungssteigerung bei der Positionsbestimmung möglich.

Ebenso wäre wie im vorhergehenden Beispiel wiederum möglich, diese Variante als Differential-Planspiegel-Interferometer auszubilden. Hierzu wäre wie oben i.w. ein zweiter Planspiegel-Meßreflektor erforderlich, auf den dann zwei der vier entsprechenden Austritts-Strahlenbündel SA2, SA2' auftreffen.

Die vorliegende Erfindung ist somit keinesfalls auf die vorliegenden Ausführungsbeispiele beschränkt; vielmehr existieren im Rahmen der Lehre vorliegender Erfindung eine Reihe vorteilhafter Ausführungsmöglichkeiten.

## Patentansprüche

1. Strahlteilerbaugruppe, inbesondere für ein Interferometer, um ein darauf auftreffendes Eintritts-Strahlenbündel (S) in mindestens ein erstes und mindestens ein hierzu paralleles zweites Austritts-Strahlenbündel (SA1, SA2; SB1, SB2) aufzuteilen, wobei die Strahlteilerbaugruppe mindestens ein Strahlteilerelement (1; 21; 31; 41; 71; 81) und mindestens ein Ausgleichselement (2; 22; 32.A, 32.B; 42A, 42B; 72; 82) umfaßt und das Strahlteilerelement (1; 21; 31; 41; 71; 81) aus einer transparenten Platte besteht, die zwei parallele Grenzflächen (1.1, 1.2; 21.1, 21.2; 31.1, 31.2) aufweist, von denen eine Grenzfläche (1.2; 21.1; 31.1, 31.2) zumindest teilweise als Strahlteilerfläche (1.3; 21.3; 31.3, 31.5, 31.6; 41.3, 41.4, 41.5; 71.2; 81.2) und eine weitere, zur erstgenannten Grenzfläche (1.2; 21.1; 31.1, 31.2) parallele Grenzfläche (1.1; 21.2; 31.1, 31.2) zumindest in einem Teilbereich als zumindest teilreflektierende Reflektorfläche (1.4; 21.4; 31.3, 31.5, 31.6; 41.1, 41.2; 71.1; 81.1) wirkt und das Ausgleichselement (2; 22; 32.A, 32.B; 42A, 42B; 72; 82) derart in Bezug auf das Strahlteilerelement (1; 21; 31; 41; 71; 81) angeordnet ist, dass mindestens zwei Austritts-Strahlenbündel (SA1, SA2; SB1, SB2) parallel zueinander verlaufen,
**dadurch gekennzeichnet, dass**
das Ausgleichselement (2; 22; 32.A, 32.B; 42A, 42B; 72; 82) desweiteren derart dimensioniert ist, dass die Austritts-Strahlenbündel (SA1, SA2; SB1, SB2) im wesentlichen die gleichen optischen Weglängen im Strahlteilerelement (1; 21; 31; 41; 71; 81) und im Ausgleichselement (SA1, SA2; SB1, SB2; 42A, 42B; 72; 82) durchlaufen haben.

2. Strahlteilerbaugruppe nach Anspruch 1, **dadurch gekennzeichnet, dass** die Strahlteilerfläche (1.3; 21.3; 31.3, 31.5, 31.6; 41.3, 41.4, 41.5; 71.2; 81.2) eine Aufspaltung des darauf auftreffenden Eintritts-Strahlenbündels (S) in zwei zueinander senkrecht polarisierte Teil-Strahlenbündel (SR, ST; STR, STT, STRR) bewirkt.

3. Strahlteilerbaugruppe nach Anspruch 1, **dadurch gekennzeichnet, dass** die Strahlteilerfläche (1.3; 21.3; 31.3, 31.5, 31.6; 41.3, 41.4, 41.5; 71.2; 81.2) eine Aufspaltung des darauf auftreffenden Eintritts-Strahlenbündels (S) in identisch polarisierte Teil-Strahlenbündel (SR, ST; STR, STT, STRR) bewirkt.

4. Strahlteilerbaugruppe nach Anspruch 1, **dadurch gekennzeichnet, dass** die Reflektorfläche (1.4; 21.4; 31.3, 31.5, 31.6; 41.1, 41.2; 71.1; 81.1) als hochreflektierendes dielektrisches Schichtpaket ausgebildet ist.

5. Strahlteilerbaugruppe nach Anspruch 1, **dadurch gekennzeichnet, dass** das Ausgleichselement (2; 22; 32.A, 32.B; 42A, 42B; 72; 82) beabstandet vom Strahlteilerelement (1; 21; 31; 41; 71; 81) angeordnet ist.

6. Strahlteilerbaugruppe nach Anspruch 1, **dadurch gekennzeichnet, dass** auch das Ausgleichselement (2; 22; 32.A, 32.B; 42A, 42B; 72; 82) als planparallele Platte ausgebildet ist, durch deren parallele Grenzflächen
(2.1, 2.2; 22.1, 22.2; 32.A1, 32.A2, 32.B1, 32.B2) die Strahlenbündel ein- und austreten.

7. Strahlteilerbaugruppe nach Anspruch 1, **dadurch gekennzeichnet, dass** das Strahlteilerelement (1) und das Ausgleichselement (2) in Bezug auf das darauf einfallende Eintritts-Strahlenbündel (S) dergestalt ausgebildet und angeordnet sind, dass das Eintritts-Strahlenbündel (S) unter einem definierten Einfallswinkel (α) gegen das Lot (L) auf eine erste Grenzfläche (1.1) in das Strahlteilerelement (1) eintritt und nach dem Durchlaufen auf die Strahlteilerfläche (1.3) auf der zweiten Grenzfläche (1.2) auftrifft, von wo
- ein erstes Teilstrahlenbündel (SR) in Richtung der ersten Grenzfläche (1.1) zur Reflektorfläche (1.4) zurückreflektiert wird und von dort wiederum in Richtung der zweiten Grenzfläche (1.2) reflektiert wird, die es in einem transparenten Bereich durchtritt und die Strahlteilerbaugruppe als erstes Austritts-Strahlenbündel (SA1) verläßt, und
- ein zweites Teilstrahlenbündel (ST) die Strahlteilerfläche (1.3) durchtritt und auf eine erste Grenzfläche (2.1) des Ausgleichselementes (2) auftrifft, dieses durchläuft und an einer zweiten Grenzfläche (2.2) als zweites Austritts-Strahlenbündel (SA2) verläßt.

8. Strahlteilerbaufgruppe nach Anspruch 7, **dadurch gekennzeichnet, dass** der Einfallswinkel (α) dem Brewster-Winkel entspricht.

9. Strahlteilerbaugruppe nach Anspruch 7, **dadurch gekennzeichnet, dass** die Dicke (D₂) des Ausgleichselementes (2) die doppelte Dicke (D₁) des Strahlteilerelementes (1) aufweist.

10. Strahlteilerbaugruppe nach Anspruch 1, **dadurch gekennzeichnet, dass** das Strahlteilerelement (21) und das Ausgleichselement (22) in Bezug auf das darauf einfallende Eintritts-Strahlenbündel (S) dergestalt ausgebildet und angeordnet sind, dass das Eintritts-Strahlenbündel (S) unter einem definierten Einfallswinkel gegen das Lot auf eine erste Grenzfläche (21.1) des Strahlteilerelementes (21) auftrifft, die in diesem Bereich als Strahlteilerfläche (21.3) wirkt, von wo
- ein erstes Teilstrahlenbündel (ST) die Strahlteilerfläche (21.3) durchtritt und auf die gegenüberliegende zweite Grenzfläche (21.2) des Strahlteilerelementes (21) auftrifft, die in diesem Bereich als Reflektorfläche (21.4) wirkt und von dort wiederum in Richtung der ersten Grenzfläche (21.1) des Strahlteilerelementes (21) reflektiert wird, die es in einem transparenten Bereich durchtritt und die Strahlteilerbaugruppe als erstes Austritts-Strahlenbündel (SA1) verläßt, und
- ein zweites Teilstrahlenbündel (SR) von der Strahlteilerfläche (21.3) in Richtung des Ausgleichselementes (22) reflektiert wird und auf eine erste Grenzfläche (22.1) des Ausgleichselementes (22) auftrifft, dieses durchläuft und an einer zweiten Grenzfläche (22.2) als zweites Austritts-Strahlenbündel (SA2) verläßt.

11. Strahlteilerbaugruppe nach Anspruch 1, **dadurch gekennzeichnet, dass** das Strahlteilerelement (31) und zwei Ausgleichselemente (32.A, 32.B) in Bezug auf das darauf einfallende Eintritts-Strahlenbündel (S) dergestalt ausgebildet und angeordnet sind, dass das Eintritts-Strahlenbündel (S) unter einem definierten Einfallswinkel gegen das Lot auf eine erste Grenzfläche (31.1) des Strahlteilerelementes (31) auftrifft, die in diesem Bereich als erste Strahlteilerfläche (31.3) wirkt, von wo
- ein erstes Teilstrahlenbündel (SR) von der ersten Strahlteilerfläche (31,3) in Richtung des ersten Ausgleichselementes (32.B) reflektiert wird und auf eine erste Grenzfläche (32.B1) des ersten Ausgleichselementes (32.B) auftrifft, dieses durchläuft und an einer zweiten Grenzfläche (32.B2) als erstes Austritts-Strahlenbündel (SB1) verläßt,
- ein zweites Teilstrahlenbündel (ST) die erste Strahlteilerfläche (31.3) durchtritt, das Strahlteilerelement (31) in Richtung der zweiten Grenzfläche (31.2) durchläuft und dort in einem Teilbereich auftrifft, der als zweite Strahlteilerfläche (31.5) wirkt und von wo
- ein drittes Teilstrahlenbündel (STR) in Richtung der ersten Grenzfläche (31.1) zurückreflektiert wird, wo es auf einen Teilbereich auftrifft, der als dritte Strahlteiterfläche (31.6) wirkt und von wo
- ein fünftes Teilstrahlenbündel die dritte Strahlteilerfläche (31.6) durchtritt und die Strahlteilerbaugruppe als zweites Austritts-Strahlenbündel (SB2) verläßt, welches parallel zum ersten Austritts-Strahlenbündel (SB1) orientiert ist und
- ein an der zweiten Strahlteilerfläche (31.5) transmittiertes, viertes Teilstrahlenbündel (STT) auf eine erste Grenzfläche (32.A1) des zweiten Ausgleichselementes (32.A) auftrifft, dieses durchläuft und an einer zweiten Grenzfläche (32.A2) das zweite Ausgleichselement (32.A) als drittes Austrittsstrahlenbündel (SA2) verläßt und
- ein an der dritten Strahlteilerfläche (31.6) reflektiertes, sechstes Teilstrahlenbündel (STRR) in Richtung der zweiten Grenzfläche (31.2) des Strahlteilerelementes (31) umgelenkt wird, die es in einem transparenten Bereich durchtritt und die Strahlteilerbaugruppe als viertes Austritts-Strahlenbündel (SA1) verläßt, welches parallel zum dritten Austritts-Strahlenbündel (SA2) orientiert ist.

12. Strahlteilerbaugruppe nach Anspruch 11, **dadurch gekennzeichnet, dass** die ersten und zweiten Austritts-Strahlenbündel (SB1, SB2) senkrecht zu den beiden dritten und vierten Austritts-Strahlenbündeln (SA1, SA2) orientiert sind.

13. Strahlteilerbaugruppe nach Anspruch 1, **dadurch gekennzeichnet, dass** die Strahlteilerbaugruppe (300) zwei Ausgleichselemente (42A, 42B) umfaßt, durch die zwei Austritts-Strahlenbündel (SA1, SA2) die Strahlteilerbaugruppe (300) parallel zueinander verlassen, während ein drittes Austritts-Strahlenbündel (SA3) das Strahltelterelement (41) verläßt, welches ebenfalls parallel zu den beiden erstgenannten Austritts-Strahlenbündeln (SA1, SA2) orientiert ist.

14. Strahlteilerbaugruppe nach Anspruch 1, **dadurch gekennzeichnet, dass** die Strahlteilerbaugruppe (400; 500) mindestens ein vom Strahlteilerelement (71; 81) und vom Ausgleichselement (72; 82) separat angeordnetes retroreflektierendes Reflektorelement (75; 85.1, 85.2) umfaßt, welches ein von einer Strahlteilerfläche (71.2, 81.2) des Strahlteilerelementes (71; 81) kommendes Strahlenbündel wieder auf die Strahlteilerfläche (71.2, 81.2) zurückreflektiert.

15. Verwendung einer Strahlteilerbaugruppe nach einem der vorhergehenden Ansprüche in einem Interferometer.

16. Interferometer mit
- einer Lichtquelle (51),
- mindestens einem stationären Referenzreflektor (53) im Referenzarm,
- mindestens einem in Meßrichtung (x) beweglichen Meßreflektor (54) im Meßarm,
- einer Detektoreinheit (55) zur Erfassung eines positionsabhängigen Interferenzsignales,
- einer Auswerteeineit (56) zur Weiterverarbeitung des erfaßten Interferenzsignales sowie
- mindestens einer Strahlteilerbaugruppe (100), zur Aufteilung eines von der Lichtquelle (51) emittierten und darauf auftreffenden Eintritts-Strahlenbündels (S) in mindestens ein erstes und mindestens ein hierzu paralleles zweites Austritts-Strahlenbündel (SA1, SA2; SB1, SB2), wobei die Strahlteilerbaugruppe (100) mindestens ein Strahlteilerelement (1; 21; 31; 41; 71; 81) und mindestens ein Ausgleichselement (2; 22; 32A, 32B; 42A, 42B; 72; 82) umfaßt und das Strahlteilerelement (1; 21; 31; 41; 71; 81) aus einer transparenten Platte besteht, die zwei parallele Grenzflächen aufweist, von denen eine Grenzfläche zumindest teilweise als Strahlteilerfläche und eine weitere, zur erstgenannten Grenzfläche parallele Grenzfläche zumindest in einem Teilbereich als zumindest teilreflektierende Reflektorfläche fungiert und das Ausgleichselement (2; 22; 32A, 32B; 42A, 42B; 72; 82) derart in Bezug auf das Strahlteilerelement (1; 21; 31; 41; 71; 81) angeordnet ist, dass mindestens zwei Austritts-Strahlenbündel (SA1, SA2; SB1, SB2) parallel zueinander verlaufen,
**dadurch gekennzeichnet, dass**
die Austritts-Strahlenbündel (SA1, SA2; SB1, SB2) im wesentlichen die gleichen optischen Weglängen im Interferometer durchlaufen haben, ehe sie auf die Detektoreinheit (55) gelangen.

17. Interferometer nach Anspruch 16, **dadurch gekennzeichnet, dass** im Strahlengang mindestens eines Austritts-Strahlenbündels ein optisches Element angeordnet ist, welches derart dimensioniert ist, dass darüber optische Weglängen für dieses Austritts-Strahlenbündel aus der Strahlteilerbaugruppe einstellbar ist.

18. Interferometer nach Anspruch 17, **dadurch gekennzeichnet, dass** das optische Element als planparallele Platte ausgebildet ist.

19. Interferometer nach Anspruch 16 mit einer Strahlteilerbaugruppe (300) nach Anspruch 13, **dadurch gekennzeichnet, dass** zwei der Austritts-Strahlenbündel (SA1, SA3) zwei Meßreflektoren (54A, 54B) beaufschlagen, die gemeinsam in einer Baueinheit (55) angeordnet sind, die linear in Meßrichtung (x) verschiebbar und drehbar um eine Achse (z) senkrecht zur Meßrichtung (x) angeordnet ist.

20. Interferometer nach Anspruch 16 mit einer Strahlteilerbaugruppe (400; 500) nach Anspruch 14, **dadurch gekennzeichnet, dass** mindestens einer der beiden Reflektoren (74; 84) als Planspiegel ausgebildet ist.

## Claims

1. Beam splitter assembly, in particular for an interferometer, to separate an entering bundle of rays (S) striking this into at least a first emergent bundle of rays (SA1, SA2; SB1, SB2) and at least a second parallel to the first, wherein the beam splitter assembly comprises at least one beam splitter element (1; 21; 31; 41; 71; 81) and at least one compensating element (2; 22; 32.A, 32.B; 42A, 42B; 72; 82) and the beam splitter element (1; 21; 31; 41; 71; 81) consists of a transparent plate, which has two parallel boundary surfaces (1.1, 1.2; 21.1, 21.2; 31.1, 31.2), of which one boundary surface (1.2; 21.1; 31.1, 31.2) acts at least partially as a beam splitter surface (1.3; 21.3; 31.3, 31.5, 31.6; 41.3, 41.4, 41.5; 71.2; 81.2) and a further boundary surface (1.1; 21.2; 31.1, 31.2) parallel to the first mentioned boundary surface (1.2; 21.1; 31.1, 31.2) acts, at least in a sub-region, as at least a partially reflecting reflector surface (1.4; 21.4; 31.3, 31.5, 31.6; 41.1, 41.2; 71.1; 81.1), and the compensating element (2; 22; 32.A, 32.B; 42A, 42B; 72; 82) is disposed in relation to the beam splitter element (1; 21; 31; 41; 71; 81) in such a manner that at least two emergent bundles of rays (SA1, SA2; SB1, SB2) run parallel to one another,
**characterised in that** the compensating element (2; 22; 32.A, 32.B; 42A, 42B; 72; 82) is moreover dimensioned such that the emergent bundle of rays (SA1, SA2; SB1, SB2) essentially have traversed the same optical path lengths in the beam splitter element (1; 21; 31; 41; 71; 81) and in the compensating element (SA1, SA2; SB1, SB2; 42A, 42B; 72; 82).

2. Beam splitter assembly according to Claim 1, **characterised in that** the beam splitter surface (1.3; 21.3; 31.3, 31.5, 31.6; 41.3, 41.4, 41.5; 71.2; 81.2) causes a separation of the entering bundle of rays (S) striking this into two partial bundles of rays (SR, ST; STR. STT. STRR) polarised in mutually perpendicular directions.

3. Beam splitter assembly according to Claim 1, **characterised in that** the beam splitter surface (1.3; 21.3; 31.3, 31.5, 31.6; 41.3, 41.4, 41.5; 71.2; 81.2) causes a separation of the entering bundle of rays (S) striking this into two partial bundles of rays (SR, ST; STR, STT, STRR) polarised identically.

4. Beam splitter assembly according to Claim 1, **characterised in that** the reflector surface (1.4; 21.4; 31.3, 31.5, 31.6; 41.1, 41.2; 71.1; 81.1) is configured as a pack of highly reflective dielectric layers.

5. Beam splitter assembly according to Claim 1, **characterised in that** the compensating element (2; 22; 32.A, 32.B; 42A, 42B; 72; 82) is disposed at a distance from the beam splitter element (1; 21; 31; 41; 71; 81).

6. Beam splitter assembly according to Claim 1, **characterised in that** the compensating element (2; 22; 32.A, 32.B; 42A, 42B; 72; 82) is also constructed in the form of a plane-parallel plate, through the parallel boundary surfaces (2.1, 2.2; 22.1, 22.2; 32.A1, 32.A2, 32.B1, 32.B2) of which the bundles of rays enter and exit.

7. Beam splitter assembly according to Claim 1, **characterised in that** the beam splitter element (1) and the compensating element (2) are configured and disposed with respect to the entering bundle of rays (S) falling thereon in such a manner that the entering bundle of rays (S) enters the beam splitter element (1) at a defined angle of incidence (a) to the vertical (L) at a first boundary surface (1.1) and after traversing strikes the beam splitter surface (1.3) on the second boundary surface (1.2), from which
· a first partial bundle of rays (SR) is reflected back to the reflector surface (1.4) in the direction of the first boundary surface (1.1) and from there is reflected in turn in the direction of the second boundary surface (1.2), which it passes through in a transparent region and leaves the beam splitter assembly as first emergent bundle of rays (SA1), and
· a second partial bundle of rays (ST) passes through the beam splitter surface (1.3) and strikes a first boundary surface (2.1) of the compensating element (2), traverses this and at a second boundary surface (2.2) leaves it as second emergent bundle of rays (SA2).

8. Beam splitter assembly according to Claim 7, **characterised in that** the angle of incidence (a) corresponds to the Brewster angle.

9. Beam splitter assembly according to Claim 7, **characterised in that** the thickness (D₂) of the compensating element (2) has double the thickness (D₁) of the beam splitter element (1).

10. Beam splitter assembly according to Claim 1, **characterised in that** the beam splitter element (21) and the compensating element (22) are configured and disposed with respect to the entering bundle of rays (S) falling thereon in such a manner that the entering bundle of rays (S) strikes a first boundary surface (21.1) of the beam splitter element (21) at a defined angle of incidence to the vertical, which in this region acts as a beam splitter surface (21.3), from which
· a first partial bundle of rays (ST) passes through the beam splitter surface (21.3) and strikes the opposing second boundary surface (21.2) of the beam splitter element (21), which in this region acts as a reflector surface (21.4), and from there is reflected in turn in the direction of the first boundary surface (21.1) of the beam splitter element (21), which it passes through in a transparent region and leaves the beam splitter assembly as first emergent bundle of rays (SA1), and
· a second partial bundle of rays (SR) is reflected by the beam splitter surface (21.3) in the direction of the compensating element (22) and strikes a first boundary surface (22.1) of the compensating element (22), traverses this and at a second boundary surface (22.2) leaves it as second emergent bundle of rays (SA2).

11. Beam splitter assembly according to Claim 1, **characterised in that** the beam splitter element (31) and two compensating elements (32.A, 32.B) are configured and disposed with respect to the entering bundle of rays (S) falling thereon in such a manner that the entering bundle of rays (S) strikes a first boundary surface (31.1) of the beam splitter element (31) at a defined angle of incidence to the vertical, which in this region acts as first beam splitter surface (31.3), from which
· a first partial bundle of rays (SR) is reflected by the first beam splitter surface (31.3) in the direction of the first compensating element (32.B) and strikes a first boundary surface (32.B1) of the first compensating element (32.B), traverses this and at a second boundary surface (32.B2) leaves it as first emergent bundle of rays (SB1),
· a second partial bundle of rays (ST) passes through the first beam splitter surface (31.3), traverses the beam splitter element (31) in the direction of the second boundary surface (31.2) and there strikes in a sub-region, which acts as second beam splitter surface (31.5), and from which
· a third partial bundle of rays (STR) is reflected back in the direction of the first boundary surface (31.1), where it strikes a sub-region, which acts as third beam splitter surface (31.6), and from which
· a fifth partial bundle of rays passes through the third beam splitter surface (31.6) and leaves the beam splitter assembly as second emergent bundle of rays (SB2), which is oriented parallel to the first emergent bundle of rays (SB1), and
· a fourth partial bundle of rays (STT) transmitted on the second beam splitter surface (31.5) strikes a first boundary surface (32.A1) of the second compensating element (32.A), traverses this and at a second boundary surface (32.A2) leaves the second compensating element (32.A) as third emergent bundle of rays (SA2), and
· a sixth partial bundle of rays (STRR) reflected on the third beam splitter surface (31.6) is deflected in the direction of the second boundary surface (31.2) of the beam splitter element (31), which it passes through in a transparent region and leaves the beam splitter assembly as fourth emergent bundle of rays (SA1), which is oriented parallel to the third emergent bundle of rays (SA2).

12. Beam splitter assembly according to Claim 11, **characterised in that** the first and second emergent bundle of rays (SB1, SB2) are oriented perpendicular to both the third and fourth emergent bundles of rays (SA1, SA2).

13. Beam splitter assembly according to Claim 1, **characterised in that** the beam splitter assembly (300) comprises two compensating elements (42A, 42B), through which two emergent bundles of rays (SA1, SA2) leave the beam splitter assembly (300) parallel to one another, while a third emergent bundle of rays (SA3) leaves the beam splitter element (41), which is likewise oriented parallel to the two first-mentioned emergent bundles of rays (SA1, SA2).

14. Beam splitter assembly according to Claim 1, **characterised in that** the beam splitter assembly (400; 500) comprises at least one retroreflective reflector element (75; 85.1, 85.2), which is disposed separately from the beam splitter element (71; 81) and from the compensating element (72; 82) and which reflects a bundle of rays coming from a beam splitter surface (71.2, 81.2) of the beam splitter element (71; 81) back onto the beam splitter surface (71.2, 81.2) again.

15. Use of a beam splitter assembly according to one of the preceding claims in an interferometer.

16. Interferometer with
· a light source (51),
· at least one fixed reference reflector (53) in the reference arm,
· at least one measurement reflector (54) moveable in the direction of measurement in the measurement arm,
· a detector unit (55) for detecting a position-dependent interference signal,
· an evaluation unit (56) for further processing of the detected interference signal, and
· at least one beam splitter assembly (100) for the separation of an entering bundle of rays (S) emitted by the light source (51) and striking this into at least a first emergent bundle of rays (SA1, SA2; SB1, SB2) and at least a second parallel to the first, wherein the beam splitter assembly (100) comprises at least one beam splitter element (1; 21; 31; 41; 71; 81) and at least one compensating element (2; 22; 32.A, 32.B; 42A, 42B; 72; 82), and the beam splitter element (1; 21; 31; 41; 71; 81) consists of a transparent plate, which has two parallel boundary surfaces, of which one boundary surface acts at least partially as a beam splitter surface and a further boundary surface parallel to the first mentioned boundary surface acts, at least in a sub-region, as at least a partially reflecting reflector surface, and the compensating element (2; 22; 32.A, 32.B; 42A, 42B; 72; 82) is disposed in relation to the beam splitter element (1; 21; 31; 41; 71; 81) in such a manner that at least two emergent bundles of rays (SA1, SA2; SB1, SB2) run parallel to one another,
**characterised in that** the emergent bundle of rays (SA1, SA2; SB1, SB2) have traversed essentially the same optical path lengths in the interferometer before they reach the detector unit (55).

17. Interferometer according to Claim 16, **characterised in that** in the optical path of at least one emergent bundle of rays, an optical element is disposed which is dimensioned such that optical path lengths for this emergent bundle of rays from the beam splitter assembly are adjustable via this.

18. Interferometer according to Claim 17, **characterised in that** the optical element is provided in the form of a plane-parallel plate.

19. Interferometer according to Claim 16 with a beam splitter assembly (300) according to Claim 13, **characterised in that** two of the emergent bundles of rays (SA1, SA3) act on two measurement reflectors (54A, 54B), which are disposed together in one structural unit (55), which is disposed to be linearly displaceable in the direction of measurement (x) and rotatable around an axis (z) perpendicular to the direction of measurement (x).

20. Interferometer according to Claim 16 with a beam splitter assembly (400; 500) according to Claim 14, **characterised in that** at least one of the two reflectors (74; 84) is provided in the form of a plane mirror.

## Revendications

1. Module séparateur de faisceau, en particulier destiné à un interféromètre, pour séparer un faisceau entrant (S) incident en au moins un premier et au moins un deuxième faisceau sortant (SA1, SA2 ; SB1, SB2), le module séparateur comprenant au moins un élément séparateur (1 ; 21 ; 31 ; 41 ; 71 ; 81) et au moins un élément compensateur (2 ; 22 ; 32.A, 32.B ; 42.A, 42.B ; 72 ; 82), l'élément séparateur (1 ; 21 ; 31 ; 41 ; 71 ; 81) étant formé d'une lame transparente, qui présente deux interfaces parallèles (1.1, 1.2 ; 21.1, 21.2 ; 31.1, 31.2), parmi lesquelles une interface (1.2 ; 21.1 ; 31.1, 31.2) est conformée au moins partiellement en surface séparatrice de faisceau (1.3 ; 21.3 ; 31.3, 31.5, 31 .6 ; 41.3, 41.4, 41.5 ; 71.2, ; 81.2) et une interface (1.1 ; 21.2 ; 31.1, 31.2) supplémentaire parallèle à la première (1.2 ; 21.1 ; 31.1, 31.2), au moins dans une zone partielle, agit en surface au moins partiellement réflectrice (1.4 ; 21.4 ; 31.3, 31.5, 31.6 ; 41.1, 41.2 ; 71.1 ; 81.1), l'élément compensateur (2 ; 22 ; 32.A, 32.B ; 42.A, 42.B ; 72 ; 82) étant disposé de manière telle par rapport à l'élément séparateur (1 ; 21 ; 31 ; 41 ; 71 ; 81), qu'au moins deux faisceaux sortants (SA1, SA2 ; SB1, SB2) soient mutuellement parallèles,
**caractérisé en ce que**
l'élément compensateur (2 ; 22 ; 32.A, 32.B ; 42.A, 42.B ; 72 ; 82), en outre, est dimensionné de telle sorte que les faisceaux sortants (SA1, SA2 ; SB1, SB2) parcourent essentiellement les mêmes longueurs de trajet optique dans l'élément séparateur (1 ; 21 ; 31 ; 41 ; 71 ; 81) et dans l'élément compensateur (2 ; 22 ; 32.A, 32.B ; 42.A, 42.B ; 72 ; 82).

2. Module séparateur de faisceau selon la revendication 1, **caractérisé en ce que** la surface séparatrice de faisceau (1.3 ; 21.3 ; 31.3, 31.5, 31 .6 ; 41.3, 41.4, 41.5 ; 71.2, ; 81.2) opère une division du faisceau entrant (S) en deux faisceaux partiels (SR, ST ; STR, STRR) polarisés perpendiculairement l'un à l'autre.

3. Module séparateur de faisceau selon la revendication 1, **caractérisé en ce que** la surface séparatrice de faisceau (1.3 ; 21.3 ; 31.3, 31.5, 31 .6 ; 41.3, 41.4, 41.5 ; 71.2, ; 81.2) opère une division du faisceau entrant (S) incident en des faisceaux partiels (SR, ST ; STR, STRR) de polarisation identique.

4. Module séparateur de faisceau selon la revendication 1, **caractérisé en ce que** la surface réflectrice (1.4 ; 21.4 ; 31.3, 31.5, 31.6 ; 41.1, 41.2 ; 71.1 ; 81.1) est conformée en empilage de couches diélectrique à haut pouvoir réfléchissant.

5. Module séparateur de faisceau selon la revendication 1, **caractérisé en ce que** l'élément compensateur (2 ; 22 ; 32.A, 32.B ; 42.A, 42.B ; 72 ; 82) est disposé à distance de l'élément séparateur (1 ; 21 ; 31 ; 41 ; 71 ; 81).

6. Module séparateur de faisceau selon la revendication 1, **caractérisé en ce que** l'élément compensateur (2 ; 22 ; 32.A, 32.B ; 42.A, 42.B ; 72 ; 82) est également conformé en lame plane parallèle à travers les interfaces parallèles (2.1, 2.2 ; 22.1, 22.2 ; 32.A1, 32.A2, 32.B1, 32.B2) de laquelle les faisceaux entrent et sortent.

7. Module séparateur de faisceau selon la revendication 1, **caractérisé en ce que** l'élément séparateur (1) et l'élément compensateur (2), par rapport au faisceau entrant (S) incident, sont conformés et disposés de telle sorte que le faisceau entrant (S) entre dans l'élément séparateur de faisceau (1) sous un angle d'incidence (α) défini par rapport à la perpendiculaire (L) sur une première interface (1.1) et après l'avoir traversée arrive sur la surface séparatrice (1.3) sur la deuxième interface (1.2), à partir de laquelle
- un premier faisceau partiel (SR) est rétroréfléchi en direction de la première interface (1.1), vers la surface réflectrice (1.4), et de là est à nouveau réfléchi en direction de la deuxième interface (1.2), traverse celle-ci dans une zone transparente et quitte en tant que premier faisceau sortant (SA1) le module séparateur, et
- un deuxième faisceau partiel (ST) traverse la surface séparatrice (1.3) et arrive sur une première interface (2.1) de l'élément compensateur (2), parcourt celui-ci et sort en tant que deuxième faisceau sortant (SA2) au niveau d'une deuxième interface (2.2).

8. Module séparateur de faisceau selon la revendication 7, **caractérisé en ce que** l'angle d'incidence (α) correspond à l'angle de Brews.

9. Module séparateur de faisceau selon la revendication 7, **caractérisé en ce que** l'épaisseur (D₂) de l'élément compensateur (2) est double de l'épaisseur (D₁) de l'élément séparateur (1).

10. Module séparateur de faisceau selon la revendication 1, **caractérisé en ce que** l'élément séparateur (21) et l'élément compensateur (22) par rapport au faisceau entrant (S) incident sont conformés et disposés de telle sorte que le faisceau entrant (S) entre dans l'élément séparateur de faisceau (21) sous un angle d'incidence défini par rapport à la perpendiculaire (L), sur une première interface (2.1) qui, dans cette zone, agit en surface séparatrice (21.3) et de là
- un premier faisceau partiel (ST) traverse la surface séparatrice (21.3) et arrive sur la deuxième interface (21.2) située en vis-à-vis de l'élément séparateur de faisceau (21), qui, dans cette zone agit en surface réflectrice (21.4) et de là est à nouveau réfléchi en direction de la première interface (21.1) de l'élément séparateur de faisceau (21), qu'il traverse dans une zone transparente et quitte le module séparateur en tant que premier faisceau sortant (SA1), et
- un deuxième faisceau partiel (SR) est réfléchi par la surface séparatrice (21.3) en direction de l'élément compensateur (22) et arrive sur une première interface (22.1) de l'élément compensateur (22), traverse celui-ci et sort en tant que deuxième faisceau sortant (SA2) au niveau d'une deuxième interface (22.2).

11. Module séparateur de faisceau selon la revendication 1, **caractérisé en ce que** l'élément séparateur (31) et deux éléments compensateurs (32.A, 32.B), par rapport au faisceau entrant (S) incident, sont conformés et disposés de telle sorte, que le faisceau entrant (S) arrive sous un angle d'incidence défini par rapport à la perpendiculaire (L), sur une première interface (31.1) de l'élément séparateur (31) qui, dans cette zone, agit en première surface séparatrice (31.3) et de là
- un premier faisceau partiel (SR) est réfléchi par la première surface séparatrice (31.3) en direction du premier élément compensateur (32.B), et arrive sur une première interface (32.B1) du premier élément compensateur (32.B), parcourt celui-ci et sort en tant que premier faisceau sortant (SB1) au niveau de la deuxième interface (32.B2),
- un deuxième faisceau partiel (ST) traverse la première surface séparatrice (31.3), parcourt l'élément séparateur (31) en direction de la deuxième interface (31.2) et là, arrive sur une zone partielle qui agit en deuxième surface séparatrice (31.5), et de là
- un troisième faisceau partiel (STR) est rétroréfléchi en direction de la première interface (31.1) où il arrive sur une zone partielle qui agit en troisième surface séparatrice (31.6), et de là
- un cinquième faisceau partiel traverse la troisième surface séparatrice (31.6) et quitte le module séparateur en tant que deuxième faisceau sortant (SB2) orienté parallèlement au premier faisceau sortant (SB1) et
- un quatrième faisceau partiel (STT) transmis au niveau de la deuxième surface séparatrice (31.5) arrive sur une première interface (32.A1) du deuxième élément compensateur (32.A), parcourt celui-ci et quitte le deuxième élément compensateur (32A) en tant que troisième faisceau sortant (SA2) au niveau d'une deuxième interface (32.A2) et
- un sixième faisceau partiel (STRR) réfléchi au niveau de la troisième surface séparatrice (31.6) est dévié en direction de la deuxième interface (31.2) de l'élément séparateur (31), qu'il traverse au niveau d'une zone transparente et quitte le module séparateur en tant que quatrième faisceau sortant (SA1), orienté parallèlement au troisième faisceau sortant (SA2).

12. Module séparateur de faisceau selon la revendication 11, **caractérisé en ce que** les premier et deuxième faisceaux sortants (SB1, SB2) sont orientés perpendiculairement aux troisième et quatrième faisceaux sortants (SA1, SA2).

13. Module séparateur de faisceau selon la revendication 1, **caractérisé en ce que** le module séparateur de faisceau (300) comprend deux éléments compensateurs (42A, 42B), à travers lesquels les deux faisceaux sortants (SA1. SA2) quittent le module séparateur (300) en étant mutuellement parallèles, tandis qu'un troisième faisceau sortant (SA3) quitte l'élément séparateur (41) en étant également orienté parallèlement aux deux premiers faisceaux sortants (SA1. SA2) mentionnés.

14. Module séparateur de faisceau selon la revendication 1, **caractérisé en ce que** le module séparateur de faisceau (400; 500) comprend au moins un élément réflecteur (75; 85.1, 85.2) rétroréfléchissant monté séparément de l'élément séparateur (71, 81) et de l'élément compensateur (72, 82), qui rétroréfléchit sur lasurface séparatrice (71.2, 81.2) un faisceau provenant d'une surface (71.2, 81.2) séparatrice de l'élément séparateur (71; 81).

15. Utilisation d'un module interféromètre selon une des revendications précédentes.

16. Interféromètre comprenant
- une source de lumière (51)
- au moins un réflecteur de référence (53) stationnaire dans la branche de référence,
- au moins un réflecteur de mesure (54) stationnaire dans la branche de mesure (x),
- une unité détectrice (55) pour détecter un signal d'interférence dépendant de la position,
- au moins un module séparateur de faisceau (100) pour séparer un faisceau entrant (S) incident émis par la source de lumière (51) en au moins un premier et au moins un deuxième faisceau sortant parallèle au premier (SA1, SA2 ; SB1, SB2), le module séparateur de faisceau (100) comprenant au moins un élément séparateur (1 ; 21 ; 31 ; 41 ; 71 ; 81) et au moins un élément compensateur (2 ; 22 ; 32.A, 32.B ; 42.A, 42.B ; 72 ; 82), l'élément séparateur (1 ; 21 ; 31 ; 41 ; 71 ; 81) étant formé d'une lame transparente, qui présente deux interfaces parallèles (1.1, 1.2 ; 21.1, 21.2 ; 31.1, 31.2), parmi lesquelles une interface (1.2 ; 21.1 ; 31.1, 31.2) est conformée au moins partiellement en surface séparatrice de faisceau (1.3 ; 21.3 ; 31.3, 31.5, 31 .6 ; 41.3, 41.4, 41.5 ; 71.2, ; 81.2) et une autre interface (1.1 ; 21.2 ; 31.1, 31.2), parallèle à la première (1.2 ; 21.1 ; 31.1, 31.2), au moins dans une zone partielle, agit en surface au moins partiellement réflectrice (1.4 ; 21.4 ; 31.3, 31.5, 31.6 ; 41.1, 41.2 ; 71.1 ; 81.1), et l'élément compensateur (2 ; 22 ; 32.A, 32.B ; 42.A, 42.B ; 72 ; 82) étant disposé de manière telle par rapport à l'élément séparateur (1 ; 21 ; 31 ; 41 ; 71 ; 81), qu'au moins deux faisceaux sortants (SA1, SA2 ; SB1, SB2) soient mutuellement parallèles,
**caractérisé en ce que** les faisceaux sortants (SA1, SA2; SB1, SB2) parcourent essentiellement les mêmes longueurs optiques dans l'interféromètre avant de parvenir à l'unité détectrice (55).

17. Interféromètre selon la revendication 16, **caractérisé en ce que** dans le trajet d'au moins un faisceau sortant est disposé un élément optique qui est dimensionné de telle sorte que les longueurs des trajets optiques pour ledit faisceau sortant soient réglables.

18. Interféromètre selon la revendication 17, **caractérisé en ce que** l'élément optique est conformé en lame plane parallèle.

19. Interféromètre selon la revendication 16, comportant un module séparateur selon la revendication 13, **caractérisé en ce que** deux des faisceaux sortants (SA, SA3) arrivent sur deux réflecteurs de mesure (54A, 54B) qui sont disposés conjointement dans une unité de construction (55) pouvant se déplacer linéairement dans la direction de mesure (x) et pouvant tourner autour d'un axe (z) perpendiculaire à la direction de mesure (x).

20. Interféromètre selon la revendication 16, comportant un module séparateur (400, 500) selon la revendication 14, **caractérisé en ce qu'**au moins l'un des deux réflecteurs (74; 84) est conformé en miroir plan.
